(19)

Europäisches
Patentamt
European
Patent Office
Office européen
des brevets

(11) **EP 4 427 933 B1**

(12) **EUROPEAN PATENT SPECIFICATION**

(45) Date of publication and mention
of the grant of the patent:
**13.08.2025 Bulletin 2025/33**

(21) Application number: **23160784.7**

(22) Date of filing: **08.03.2023**

(51) International Patent Classification (IPC):
**B32B 27/08** (2006.01)   **B32B 27/18** (2006.01)
**B32B 27/22** (2006.01)   **B32B 27/32** (2006.01)
**C08J 5/18** (2006.01)   **C08L 23/04** (2006.01)
**C08L 23/08** (2025.01)

(52) Cooperative Patent Classification (CPC):
**C08L 23/04; B32B 27/08; B32B 27/18;**
**B32B 27/22; B32B 27/32; C08J 5/18; C08L 23/08;**
B32B 2250/03; B32B 2250/24; B32B 2250/242;
B32B 2250/40; B32B 2264/00; B32B 2270/00;
B32B 2272/00; B32B 2307/30;   (Cont.)

(54) **RECYCLABLE MULTILAYER FILMS HAVING A SEALING LAYER FORMED FROM A BLEND OF POLYPROPYLENES**

WIEDERVERWENDBARE MEHRSCHICHTFOLIE MIT EINER VERSIEGELUNGSSCHICHT AUS EINER MISCHUNG VON POLYPROPYLENEN

FILMS MULTICOUCHES RECYCLABLES AYANT UNE COUCHE D'ÉTANCHÉITÉ FORMÉE À PARTIR D'UN MÉLANGE DE POLYPROPYLÈNES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**11.09.2024 Bulletin 2024/37**

(73) Proprietor: **Borealis GmbH**
**1020 Vienna (AT)**

(72) Inventors:
• **WANG, Jingbo**
**4021 Linz (AT)**
• **GAHLEITNER, Markus**
**4021 Linz (AT)**
• **BERNREITNER, Klaus**
**4021 Linz (AT)**
• **NIEDERSÜß, Peter**
**4021 Linz (AT)**
• **ORTNER, Stefan**
**4021 Linz (AT)**

(74) Representative: **Maiwald GmbH**
**Elisenhof**
**Elisenstraße 3**
**80335 München (DE)**

(56) References cited:
**EP-A1- 2 546 298      EP-A1- 3 064 514**
**EP-A1- 3 672 997      EP-A1- 3 912 794**
**WO-A1-2021/053154**

• **DATABASE INSPEC [online] THE INSTITUTION OF ELECTRICAL ENGINEERS, STEVENAGE, GB; 14 March 1991 (1991-03-14), HOPKINS M B ET AL: "Electron energy distribution functions and negative ion concentrations in tandem and hybrid multicusp negative hydrogen ion sources", Database accession no. 3912794**
• **HOPKINS M B ET AL: "Electron energy distribution functions and negative ion concentrations in tandem and hybrid multicusp negative hydrogen ion sources", JOURNAL OF PHYSICS D: APPLIED PHYSICS, INSTITUTE OF PHYSICS PUBLISHING, BRISTOL, GB, vol. 24, no. 3, 14 March 1991 (1991-03-14), pages 268 - 276, XP020013593, ISSN: 0022-3727, DOI: 10.1088/0022-3727/24/3/007**

**(Cont. next page)**

(52) Cooperative Patent Classification (CPC): (Cont.)
B32B 2307/31; B32B 2307/40; B32B 2307/408;
B32B 2307/54; B32B 2307/546; B32B 2307/558;
B32B 2307/702; B32B 2307/704; B32B 2307/7166;
B32B 2307/7376; B32B 2439/70

## Description

### Field of the Invention

The present invention relates to a multilayer film (F) comprising a skin layer, a core layer and a sealing layer, wherein the sealing layer comprises a polypropylene composition comprising a RAHECO and two propylene-ethylene random copolymers.

### Background to the Invention

Plastic packaging is widely used in daily life due to a favorable cost/performance ratio. Polyolefins are easy and economical to produce with good properties and are widely used in plastic packaging.

Conflicting properties are often required in the packing industry. For example, high stiffness and toughness as well as excellent sealing behavior and good optical properties are required in parallel for plastic films. Different types of polyolefin, for example polypropylene and polyethylene, are routinely combined in blends and/or used in different layers of multilayer films to achieve desired properties. However, use of more than one polymer type complicates the task of recycling the resulting plastic packaging.

One approach to enabling recycling is a 'single material solution', where only one type of polymer material is used. This simplifies recycling of both post-consumer waste and manufacturing waste but limits the range of properties that are available. As such, there is still a need for plastic packaging that may be formed from a single polymer type though comprising various different polymer grades within HLZ:JN that polymer type, optimizing the mechanical, optical and sealing properties required for packaging materials, whilst also being straightforward to recycle. EP3912794 relates to multilayer blown films.

### Summary of the Invention

Therefore, the present invention is directed to a multilayer film (F), comprising, in the given order, the following layers:

(A) a skin layer, comprising at least 90 wt.-%, based on the total weight of the skin layer, of a polypropylene or mixture of polypropylenes;

(B) a core layer, comprising at least 90 wt.-%, based on the total weight of the core layer, of a polypropylene or mixture of polypropylenes;

(C) a sealing layer, comprising at least 90 wt.-%, based on the total weight of the sealing layer, of a polypropylene composition (PC) comprising the following components:

  i) 20 to 70 wt.-%, based on the total weight of the polypropylene composition (PC), of a random-heterophasic propylene-ethylene copolymer (RAHECO), having a melt flow rate ($MFR_2$), determined according to ISO 1133 at 230 °C and 2.16 kg, in the range from 0.1 to 10.0 g/10 min, comprising:

    a) a crystalline matrix (M) being a propylene-ethylene random copolymer; and
    b) an amorphous propylene-ethylene elastomer (E);

  ii) 10 to 50 wt.-%, based on the total weight of the polypropylene composition (PC), of a first propylene-ethylene random copolymer (R-PP1) having a melt flow rate ($MFR_2$), determined according to ISO 1133 at 230 °C and 2.16 kg, in the range from 1.0 to 6.0 g/10 min; and
  iii) 10 to 50 wt.-%, based on the total weight of the polypropylene composition (PC), of a second propylene-ethylene random copolymer (R-PP2) having a melt flow rate ($MFR_2$), determined according to ISO 1133 at 230 °C and 2.16 kg, in the range from 7.0 to 20 g/10 min

wherein the combined amounts of the random-heterophasic propylene-ethylene copolymer (RAHECO), the first propylene-ethylene random copolymer (R-PP1) and the second propylene-ethylene random copolymer (R-PP2) are at least 90 wt.-%, more preferably at least 95 wt.-%, most preferably at least 97 wt.-%, relative to the total weight of the polypropylene composition (PC).

### Definitions

describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene copolymer is a copolymer of propylene monomer units and comonomer units, preferably selected from ethylene and $C_4$-$C_8$ alpha-olefins. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.

Heterophasic propylene copolymers typically comprise:

a) a crystalline propylene homopolymer or copolymer matrix (M); and

b) an elastomeric rubber, preferably a propylene-ethylene elastomer (E);

In case of a random-heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a one-phasic propylene copolymer in that it shows two distinct glass transition temperatures Tg which are attributed to the matrix phase and the elastomeric phase.

The present invention will now be described in more detail.

## Detailed Description

Therefore, the present invention is directed to a multilayer film (F), comprising, in the given order, the following layers:

(A) a skin layer;
(B) a core layer; and
(C) a sealing layer.

## Sealing layer

The sealing layer of the present invention comprises at least 90 wt.-% of a polypropylene composition (PC), more preferably at least 95 wt.-% of the polypropylene composition (PC), yet more preferably at least 97 wt.-% of the polypropylene composition (PC), most preferably the polypropylene composition (PC) consists of the polypropylene composition (PC).

The polypropylene composition (PC) comprises the following components:

i) 20 to 70 wt.-%, based on the total weight of the polypropylene composition (PC), of a random-heterophasic propylene-ethylene copolymer (RAHECO);

ii) 10 to 50 wt.-%, based on the total weight of the polypropylene composition (PC), of a first propylene-ethylene random copolymer (R-PP1); and

iii) 10 to 50 wt.-%, based on the total weight of the polypropylene composition (PC), of a second propylene-ethylene random copolymer (R-PP2).

The combined amounts of the random-heterophasic propylene-ethylene copolymer (RAHECO), the first propylene-ethylene random copolymer (R-PP1) and the second propylene-ethylene random copolymer (R-PP2) are at least 90 wt.-%, more preferably at least 95 wt.-%, even more preferably at least 97 wt.-%, relative to the total weight of the polypropylene composition (PC).

More preferably, the polypropylene composition (PC) comprises the following components:

i) 25 to 60 wt.-%, based on the total weight of the polypropylene composition (PC), of a random-heterophasic propylene-ethylene copolymer (RAHECO);

ii) 12 to 48 wt.-%, based on the total weight of the polypropylene composition (PC), of a first propylene-ethylene random copolymer (R-PP1); and

iii) 12 to 48 wt.-%, based on the total weight of the polypropylene composition (PC), of a second propylene-ethylene random copolymer (R-PP2).

Most preferably, the polypropylene composition (PC) comprises the following components:

i) 30 to 50 wt.-%, based on the total weight of the polypropylene composition (PC), of a random-heterophasic propylene-ethylene copolymer (RAHECO);
ii) 15 to 45 wt.-%, based on the total weight of the polypropylene composition (PC), of a first propylene-ethylene random copolymer (R-PP1); and
iii) 15 to 45 wt.-%, based on the total weight of the polypropylene composition (PC), of a second propylene-ethylene random copolymer (R-PP2).

In one particularly preferred embodiment, the polypropylene composition (PC) comprises the following components:

i) 30 to 50 wt.-%, based on the total weight of the polypropylene composition (PC), of a random-heterophasic propylene-ethylene copolymer (RAHECO);
ii) 10 to 20 wt.-%, based on the total weight of the polypropylene composition (PC), of a first propylene-ethylene random copolymer (R-PP1); and
iii) 40 to 50 wt.-%, based on the total weight of the polypropylene composition (PC), of a second propylene-ethylene random copolymer (R-PP2).

In an alternative embodiment, the polypropylene composition (PC) comprises the following components:

i) 30 to 50 wt.-%, based on the total weight of the polypropylene composition (PC), of a random-heterophasic propylene-ethylene copolymer (RAHECO);
ii) 25 to 35 wt.-%, based on the total weight of the polypropylene composition (PC), of a first propylene-ethylene random copolymer (R-PP1); and
iii) 25 to 35 wt.-%, based on the total weight of the polypropylene composition (PC), of a second propylene-ethylene random copolymer (R-PP2).

In another alternative embodiment, the polypropylene composition (PC) comprises the following components:

i) 30 to 50 wt.-%, based on the total weight of the polypropylene composition (PC), of a random-heterophasic propylene-ethylene copolymer (RAHECO);
ii) 40 to 50 wt.-%, based on the total weight of the polypropylene composition (PC), of a first propylene-ethylene random copolymer (R-PP1); and
iii) 10 to 20 wt.-%, based on the total weight of the polypropylene composition (PC), of a second propylene-ethylene random copolymer (R-PP2).

If components other than the random-heterophasic propylene-ethylene copolymer (RAHECO), the first propylene-ethylene random copolymer (R-PP1), and the second propylene-ethylene random copolymer (R-PP2) are present, it is preferred that these are additives.

The skilled practitioner would be able to select suitable additives that are well known in the art.

The additives are preferably selected from pigments, antioxidants, UV-stabilisers, anti-scratch agents, mold release agents, acid scavengers, lubricants, anti-static agents, and mixtures thereof.

It is understood that the content of additives includes any carrier polymers used to introduce the additives to the polypropylene composition (PC), i.e. masterbatch carrier polymers. An example of such a carrier polymer would be a polypropylene homopolymer in the form of powder.

The individual components will now be described in more detail.

## Random-heterophasic propylene-ethylene copolymer (RAHECO)

The random-heterophasic propylene-ethylene copolymer (RAHECO) is provided in an amount in the range from 20.0 to 70.0 wt.-%, more preferably in the range from 25.0 to 60.0 wt.-%, most preferably in the range from 30.0 to 50.0 wt.-%, relative to the total weight of the polypropylene composition (PC).

The random-heterophasic propylene-ethylene copolymer (RAHECO) comprises:

a) a crystalline matrix (M) being a propylene-ethylene random copolymer; and

b) an amorphous propylene-ethylene elastomer (E).

The random-heterophasic propylene-ethylene copolymer (RAHECO) has a melt flow rate ($MFR_2$), determined according to ISO 1133 at 230 °C and 2.16 kg, in the range from 0.1 to 10.0 g/10 min, more preferably in the range from 0.3 to 5.0 g/10 min, most preferably in the range from 0.5 to 2.0 g/10 min.

The random-heterophasic propylene-ethylene copolymer (RAHECO) preferably has a melting temperature (Tm), determined by differential scanning calorimetry (DSC), in the range from 130 to 155 °C, more preferably in the range from 134 to 150 °C, most preferably in the range from 138 to 145 °C.

The crystalline matrix (M) of the random-heterophasic propylene-ethylene copolymer (RAHECO) is preferably free of 2,1-regiodefects, as determined by $^{13}$C-NMR spectroscopy.

Being free of 2,1-regiodefects is an indication that the random-heterophasic propylene-ethylene copolymer (RAHECO) has been polymerized in the presence of a Ziegler-Natta catalyst.

Therefore, it is further preferred that the random-heterophasic propylene-ethylene copolymer (RAHECO) has been polymerized in the presence of a Ziegler-Natta catalyst.

The random-heterophasic propylene-ethylene copolymer (RAHECO) preferably has an ethylene content (C2(total)), determined by FT-IR spectroscopy calibrated by quantitative $^{13}$C-NMR spectroscopy in the CRYSTEX QC method, in the range from 3.0 to 15.0 wt.-%, more preferably in the range from 5.0 to 13.0 wt.-%, most preferably in the range from 7.0 to 11.0 wt.-%.

The polymeric part of the random-heterophasic propylene-ethylene copolymer (RAHECO) may be characterized according to the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data, since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The random-heterophasic propylene-ethylene copolymer (RAHECO) preferably has a soluble fraction (SF) content, determined according to CRYSTEX QC analysis, in the range from 10 to 45 wt.-%, more preferably in the range from 13 to 35 wt.-%, most preferably in the range from 16 to 25 wt.-%.

The random-heterophasic propylene-ethylene copolymer (RAHECO) preferably has an ethylene content of the soluble fraction (C2(SF)), according to CRYSTEX QC analysis, determined by FT-IR spectroscopy calibrated by quantitative $^{13}$C-NMR spectroscopy in the CRYSTEX QC method, in the range from 17.0 to 60.0 wt.-%, more preferably in the range from 20.0 to 50.0 wt.-%, most preferably in the range from 25.0 to 40.0 wt.-%.

The random-heterophasic propylene-ethylene copolymer (RAHECO) preferably has an intrinsic viscosity, determined according to DIN ISO 1628/1, of the soluble fraction (iV(SF)), according to CRYSTEX QC analysis, in the range from 1.20 to 4.50 dL/g, more preferably in the range from 2.00 to 4.00 dL/g, most preferably in the range from 2.40 to 3.40 dL/g.

The random-heterophasic propylene-ethylene copolymer (RAHECO) preferably has a crystalline fraction (CF) content, determined according to CRYSTEX QC analysis, in the range from 55 to 90 wt.-%, more preferably in the range from 65 to 87 wt.-%, most preferably in the range from 75 to 84 wt.-%.

The random-heterophasic propylene-ethylene copolymer (RAHECO) preferably has an ethylene content of the crystalline fraction (C2(CF)), according to CRYSTEX QC analysis, determined by FT-IR spectroscopy calibrated by quantitative $^{13}$C-NMR spectroscopy in the CRYSTEX QC method, in the range from 1.0 to 8.0 wt.-%, more preferably in the range from 2.0 to 7.0 wt.-%, most preferably in the range from 3.0 to 6.0 wt.-%.

The random-heterophasic propylene-ethylene copolymer (RAHECO) preferably has an intrinsic viscosity, determined according to DIN ISO 1628/1, of the crystalline fraction (iV(CF)), according to CRYSTEX QC analysis, in the range from 1.20 to 4.50 dL/g, more preferably in the range from 2.00 to 4.00 dL/g, most preferably in the range from 2.60 to 3.60 dL/g.

It is also preferred that the ratio of the intrinsic viscosity of the soluble and crystalline fractions, (iV(SF)/iV(CF)), determined according to DIN ISO 1628/1, is in the range from 0.50 to 2.00, more preferably in the range from 0.75 to 1.50, most preferably in the range from 0.90 to 1.10.

**First propylene-ethylene random copolymer (R-PP1)**

The first propylene-ethylene random copolymer (R-PP1) is present in the polypropylene composition (PC) in an amount in the range from 10.0 to 50.0 wt.-%, more preferably from 12.0 to 48.0 wt.-%, most preferably from 15.0 to 45.0 wt.-

%, relative to the total weight of the polypropylene composition (PC).

As would be understood by the person skilled in the art, in contrast to the random-heterophasic propylene-ethylene copolymer (RAHECO), the first propylene-ethylene random copolymer (R-PP1) is monophasic.

The first propylene-ethylene random copolymer (R-PP1) is a random copolymer with propylene monomer units and ethylene comonomer units.

The first propylene-ethylene random copolymer (R-PP1) has a melt flow rate ($MFR_2$), determined according to ISO 1133 at 230 °C and 2.16 kg, in the range from 1.0 to 6.0 g/10 min, more preferably in the range from 1.2 to 4.5 g/10 min, most preferably in the range from 1.6 to 3.0 g/10 min.

The first propylene-ethylene random copolymer (R-PP1) preferably has an ethylene content (C2), determined by quantitative $^{13}$C-NMR spectroscopy, in the range from 1.0 to 5.5 wt.-%, more preferably in the range from 1.0 to 3.5 wt.-%, most preferably in the range from 1.0 to 2.0 wt.-%.

The first propylene-ethylene random copolymer (R-PP1) preferably has a xylene cold soluble (XCS) content, determined according to ISO 16152 analysis, in the range from 0.2 to 5.0 wt.-%, more preferably in the range from 0.3 to 3.0 wt.-%, most preferably in the range from 0.4 to 1.0 wt.-%.

The first propylene-ethylene random copolymer (R-PP1) preferably has a melting temperature (Tm), determined by differential scanning calorimetry (DSC), in the range from 130 to 155 °C, more preferably in the range from 136 to 151 °C, most preferably in the range from 142 to 148 °C.

The first propylene-ethylene random copolymer (R-PP1) preferably has a crystallization temperature (Tc), determined by differential scanning calorimetry (DSC), in the range from 110 to 125 °C, more preferably in the range from 112 to 122 °C, most preferably in the range from 114 to 119 °C.

The first propylene-ethylene random copolymer (R-PP1) preferably has a content of 2,1-regiodefects, as determined by $^{13}$C-NMR spectroscopy, in the range from 0.05 to 1.40 mol-%, more preferably in the range from 0.10 to 1.10 mol-%, most preferably in the range from 0.20 to 0.90 mol-%.

The presence of 2,1-regiodefects is an indication that the first propylene-ethylene random copolymer (R-PP1) has been polymerized in the presence of a single site catalyst (SSC).

Therefore, it is further preferred that the first propylene-ethylene random copolymer (R-PP1) has been polymerized in the presence of a single site catalyst (SSC).

**Second propylene-ethylene random copolymer (R-PP2)**

The second propylene-ethylene random copolymer (R-PP2) is present in the polypropylene composition (PC) in an amount in the range from 10.0 to 50.0 wt.-%, more preferably from 12.0 to 48.0 wt.-%, most preferably from 15.0 to 45.0 wt.-%, relative to the total weight of the polypropylene composition (PC).

As would be understood by the person skilled in the art, in contrast to the random-heterophasic propylene-ethylene copolymer (RAHECO), the second propylene-ethylene random copolymer (R-PP2) is monophasic.

The second propylene-ethylene random copolymer (R-PP2) is a random copolymer with propylene monomer units and ethylene comonomer units.

The second propylene-ethylene random copolymer (R-PP2) has a melt flow rate ($MFR_2$), determined according to ISO 1133 at 230 °C and 2.16 kg, in the range from 7.0 to 20.0 g/10 min, more preferably in the range from 8.0 to 17.0 g/10 min, most preferably in the range from 9.0 to 14.0 g/10 min.

The second propylene-ethylene random copolymer (R-PP2) preferably has an ethylene content (C2), determined by quantitative $^{13}$C-NMR spectroscopy, in the range from 1.0 to 5.5 wt.-%, more preferably in the range from 1.5 to 4.0 wt.-%, most preferably in the range from 2.0 to 3.0 wt.-%.

The second propylene-ethylene random copolymer (R-PP2) preferably has a xylene cold soluble (XCS) content, determined according to ISO 16152 analysis, in the range from 0.2 to 5.0 wt.-%, more preferably in the range from 0.3 to 3.0 wt.-%, most preferably in the range from 0.4 to 1.0 wt.-%.

The second propylene-ethylene random copolymer (R-PP2) preferably has a melting temperature (Tm), determined by differential scanning calorimetry (DSC), in the range from 125 to 145 °C, more preferably in the range from 126 to 135 °C, most preferably in the range from 127 to 130 °C.

The second propylene-ethylene random copolymer (R-PP2) preferably has a crystallization temperature (Tc), determined by differential scanning calorimetry (DSC), in the range from 100 to 120 °C, more preferably in the range from 103 to 115 °C, most preferably in the range from 106 to 110 °C.

The second propylene-ethylene random copolymer (R-PP2) preferably has a content of 2,1-regiodefects, as determined by $^{13}$C-NMR spectroscopy, in the range from 0.05 to 1.40 mol-%, more preferably in the range from 0.10 to 1.10 mol-%, most preferably in the range from 0.20 to 0.90 mol-%.

The presence of 2,1-regiodefects is an indication that the second propylene-ethylene random copolymer (R-PP2) has been polymerized in the presence of a single site catalyst (SSC).

Therefore, it is further preferred that the second propylene-ethylene random copolymer (R-PP2) has been polymerized in the presence of a single site catalyst (SSC).

**Skin layer and core layer**

The skin layer (A) and the core layer (B) each comprise at least 90 wt.-%, more preferably at least 95 wt.-%, most preferably at least 97 wt.-%, of a polypropylene or mixture of polypropylenes.

The compositions of skin layer (A) and of core layer (B) may be the same or different. Preferably, the composition of skin layer (A) is the same as the composition of core layer (B).

In the broadest sense, any polypropylene may be used for the skin layer (A) and core layer (B).

It is however, preferred that the skin layer (A) comprises at least 90 wt.-%, more preferably at least 95 wt.-%, most preferably at least 97 wt.-%, of a heterophasic propylene-ethylene copolymer or a mixture of heterophasic propylene-ethylene copolymers.

Likewise, it is preferred that the core layer (B) comprises at least 90 wt.-%, more preferably at least 95 wt.-%, most preferably at least 97 wt.-%, of a heterophasic propylene-ethylene copolymer or a mixture of heterophasic propylene-ethylene copolymers.

It is particularly preferred that the skin layer (A) comprises at least 90 wt.-%, more preferably at least 95 wt.-%, most preferably at least 97 wt.-%, of a polypropylene composition (PC') that comprises:

i) from 15 to 45 wt.-%, based on the total weight of the polypropylene composition (PC'), of a random-heterophasic propylene-ethylene copolymer (RAHECO'), wherein the random-heterophasic propylene-ethylene copolymer (RAHECO') comprises:

a1) a crystalline matrix (M) being a propylene-ethylene random copolymer; and
b1) an amorphous propylene-ethylene elastomer (E), and

ii) from 55 to 85 wt.-%, based on the total weight of the polypropylene composition (PC'), of a heterophasic propylene-ethylene copolymer (HECO),
wherein the heterophasic propylene-ethylene copolymer (HECO) comprises:

a2) a crystalline matrix (M) being a propylene homopolymer; and
b2) an amorphous propylene-ethylene elastomer (E).

The combined amounts of the random-heterophasic propylene-ethylene copolymer (RAHECO') and the heterophasic propylene-ethylene copolymer (HECO) are at least 90 wt.-%, more preferably at least 95 wt.-%, most preferably at least 97 wt.-%, relative to the total weight of the polypropylene composition (PC').

More preferably, the polypropylene composition (PC') comprises:

i) from 20 to 40 wt.-%, based on the total weight of the polypropylene composition (PC'), of the random-heterophasic propylene-ethylene copolymer (RAHECO'), and
ii) from 60 to 80 wt.-%, based on the total weight of the polypropylene composition (PC'), of the heterophasic propylene-ethylene copolymer (HECO).

More preferably, the polypropylene composition (PC') comprises:

i) from 25 to 35 wt.-%, based on the total weight of the polypropylene composition (PC'), of the random-heterophasic propylene-ethylene copolymer (RAHECO'), and
ii) from 65 to 75 wt.-%, based on the total weight of the polypropylene composition (PC'), of the heterophasic propylene-ethylene copolymer (HECO).

It is likewise particularly preferred that the core layer (B) comprises at least 90 wt.-%, more preferably at least 95 wt.-%, most preferably at least 97 wt.-%, of a polypropylene composition (PC') that comprises:

i) from 15 to 45 wt.-%, based on the total weight of the polypropylene composition (PC'), of a random-heterophasic propylene-ethylene copolymer (RAHECO'), wherein the random-heterophasic propylene-ethylene copolymer (RAHECO') comprises:

a1) a crystalline matrix (M) being a propylene-ethylene random copolymer; and
b1) an amorphous propylene-ethylene elastomer (E), and

ii) from 55 to 85 wt.-%, based on the total weight of the polypropylene composition (PC'), of a heterophasic propylene-ethylene copolymer (HECO),
wherein the heterophasic propylene-ethylene copolymer (HECO) comprises:

a2) a crystalline matrix (M) being a propylene homopolymer; and
b2) an amorphous propylene-ethylene elastomer (E).

The combined amounts of the random-heterophasic propylene-ethylene copolymer (RAHECO') and the heterophasic propylene-ethylene copolymer (HECO) are at least 90 wt.-%, more preferably at least 95 wt.-%, most preferably at least 97 wt.-%, relative to the total weight of the polypropylene composition (PC').

More preferably, the polypropylene composition (PC') of the core layer (B) comprises:

i) from 20 to 40 wt.-%, based on the total weight of the polypropylene composition (PC'), of the random-heterophasic propylene-ethylene copolymer (RAHECO'), and
ii) from 60 to 80 wt.-%, based on the total weight of the polypropylene composition (PC'), of the heterophasic propylene-ethylene copolymer (HECO).

More preferably, the polypropylene composition (PC') of the core layer (B) comprises:

i) from 25 to 35 wt.-%, based on the total weight of the polypropylene composition (PC'), of the random-heterophasic propylene-ethylene copolymer (RAHECO'), and
ii) from 65 to 75 wt.-%, based on the total weight of the polypropylene composition (PC'), of the heterophasic propylene-ethylene copolymer (HECO).

If components other than the random-heterophasic propylene-ethylene copolymer (RAHECO'), and the heterophasic propylene-ethylene copolymer (HECO) are present, it is preferred that these are additives.

The skilled practitioner would be able to select suitable additives that are well known in the art.

The additives are preferably selected from pigments, antioxidants, UV-stabilisers, anti-scratch agents, mold release agents, acid scavengers, lubricants, anti-static agents, and mixtures thereof.

It is understood that the content of additives includes any carrier polymers used to introduce the additives to the polypropylene composition (PC'), i.e. masterbatch carrier polymers. An example of such a carrier polymer would be a polypropylene homopolymer in the form of powder.

The individual components will now be described in more detail.

**Random-heterophasic propylene-ethylene copolymer (RAHECO')**

The random-heterophasic propylene-ethylene copolymer (RAHECO') is provided in an amount in the range from 15.0 to 45.0 wt.-%, more preferably in the range from 20.0 to 40.0 wt.-%, most preferably in the range from 25.0 to 35.0 wt.-%, relative to the total weight of the polypropylene composition (PC').

The random-heterophasic propylene-ethylene copolymer (RAHECO') comprises:

a1) a crystalline matrix (M) being a propylene-ethylene random copolymer; and
b1) an amorphous propylene-ethylene elastomer (E).

The random-heterophasic propylene-ethylene copolymer (RAHECO') preferably has a melt flow rate ($MFR_2$), determined according to ISO 1133 at 230 °C and 2.16 kg, in the range from 0.1 to 10.0 g/10 min, more preferably in the range from 0.3 to 5.0 g/10 min, most preferably in the range from 0.5 to 2.0 g/10 min.

The random-heterophasic propylene-ethylene copolymer (RAHECO') has a melting temperature (Tm), determined by differential scanning calorimetry (DSC), in the range from 130 to 155 °C, more preferably in the range from 134 to 150 °C, most preferably in the range from 138 to 145 °C.

The crystalline matrix (M) of the random-heterophasic propylene-ethylene copolymer (RAHECO') is preferably free of 2,1-regiodefects, as determined by $^{13}$C-NMR spectroscopy.

Being free of 2,1-regiodefects is an indication that the random-heterophasic propylene-ethylene copolymer (RAHECO') has been polymerized in the presence of a Ziegler-Natta catalyst.

Therefore, it is further preferred that the random-heterophasic propylene-ethylene copolymer (RAHECO') has been polymerized in the presence of a Ziegler-Natta catalyst.

The random-heterophasic propylene-ethylene copolymer (RAHECO') preferably has an ethylene content (C2(total)), determined by FT-IR spectroscopy calibrated by quantitative $^{13}$C-NMR spectroscopy in the CRYSTEX QC method, in the range from 3.0 to 15.0 wt.-%, more preferably in the range from 5.0 to 13.0 wt.-%, most preferably in the range from 7.0 to 11.0 wt.-%.

The random-heterophasic propylene-ethylene copolymer (RAHECO') preferably has a soluble fraction (SF) content, determined according to CRYSTEX QC analysis, in the range from 10 to 45 wt.-%, more preferably in the range from 13 to 35 wt.-%, most preferably in the range from 16 to 25 wt.-%.

The random-heterophasic propylene-ethylene copolymer (RAHECO') preferably has an ethylene content of the soluble fraction (C2(SF)), according to CRYSTEX QC analysis, determined by FT-IR spectroscopy calibrated by quantitative $^{13}$C-NMR spectroscopy in the CRYSTEX QC method, in the range from 17.0 to 60.0 wt.-%, more preferably in the range from 20.0 to 50.0 wt.-%, most preferably in the range from 25.0 to 40.0 wt.-%.

The random-heterophasic propylene-ethylene copolymer (RAHECO') preferably has an intrinsic viscosity, determined according to DIN ISO 1628/1, of the soluble fraction (iV(SF)), according to CRYSTEX QC analysis, in the range from 1.20 to 4.50 dL/g, more preferably in the range from 2.00 to 4.00 dL/g, most preferably in the range from 2.40 to 3.40 dL/g.

The random-heterophasic propylene-ethylene copolymer (RAHECO') preferably has a crystalline fraction (CF) content, determined according to CRYSTEX QC analysis, in the range from 55 to 90 wt.-%, more preferably in the range from 65 to 87 wt.-%, most preferably in the range from 75 to 84 wt.-%.

The random-heterophasic propylene-ethylene copolymer (RAHECO') preferably has an ethylene content of the crystalline fraction (C2(CF)), according to CRYSTEX QC analysis, determined by FT-IR spectroscopy calibrated by quantitative $^{13}$C-NMR spectroscopy in the CRYSTEX QC method, in the range from 1.0 to 8.0 wt.-%, more preferably in the range from 2.0 to 7.0 wt.-%, most preferably in the range from 3.0 to 6.0 wt.-%.

The random-heterophasic propylene-ethylene copolymer (RAHECO') preferably has an intrinsic viscosity, determined according to DIN ISO 1628/1, of the crystalline fraction (iV(CF)), according to CRYSTEX QC analysis, in the range from 1.20 to 4.50 dL/g, more preferably in the range from 2.00 to 4.00 dL/g, most preferably in the range from 2.60 to 3.60 dL/g.

It is also preferred that the ratio of the intrinsic viscosity of the soluble and crystalline fractions, (iV(SF)/iV(CF)), determined according to DIN ISO 1628/1, is in the range from 0.50 to 2.00, more preferably in the range from 0.75 to 1.50, most preferably in the range from 0.90 to 1.10.

It is particularly preferred that the random-heterophasic propylene-ethylene copolymer (RAHECO') of the polypropylene composition (PC') of the skin and/or core layer is the same as the random-heterophasic propylene-ethylene copolymer (RAHECO) of the polypropylene composition (PC) of the sealing layer.

**Heterophasic propylene-ethylene copolymer (HECO)**

The heterophasic propylene-ethylene copolymer (HECO) is provided in an amount in the range from 55.0 to 85.0 wt.-%, more preferably in the range from 60.0 to 80.0 wt.-%, most preferably in the range from 65.0 to 75.0 wt.-%, relative to the total weight of the polypropylene composition (PC').

The heterophasic propylene-ethylene copolymer (HECO) comprises:

    a2) a crystalline matrix (M) being a propylene homopolymer; and
    b2) an amorphous propylene-ethylene elastomer (E).

The heterophasic propylene-ethylene copolymer (HECO) preferably has a melt flow rate (MFR$_2$), determined according to ISO 1133 at 230 °C and 2.16 kg, in the range from 0.1 to 6.0 g/10 min, more preferably in the range from 0.3 to 3.0 g/10 min, most preferably in the range from 0.5 to 1.0 g/10 min.

The heterophasic propylene-ethylene copolymer (HECO) has a melting temperature (Tm), determined by differential scanning calorimetry (DSC), in the range from 150 to 170 °C, more preferably in the range from 155 to 168 °C, most preferably in the range from 160 to 167 °C.

The crystalline matrix (M) of the heterophasic propylene-ethylene copolymer (HECO) is preferably free of 2,1-regiodefects, as determined by $^{13}$C-NMR spectroscopy.

Being free of 2,1-regiodefects is an indication that the heterophasic propylene-ethylene copolymer (HECO) has been polymerized in the presence of a Ziegler-Natta catalyst.

Therefore, it is further preferred that the heterophasic propylene-ethylene copolymer (HECO) has been polymerized in the presence of a Ziegler-Natta catalyst.

The heterophasic propylene-ethylene copolymer (HECO) preferably has an ethylene content (C2(total)), determined by FT-IR spectroscopy calibrated by quantitative $^{13}$C-NMR spectroscopy in the CRYSTEX QC method, in the range from 3.0 to 15.0 wt.-%, more preferably in the range from 4.0 to 12.0 wt.-%, most preferably in the range from 5.0 to 9.0 wt.-%.

The heterophasic propylene-ethylene copolymer (HECO) preferably has a soluble fraction (SF) content, determined according to CRYSTEX QC analysis, in the range from 5 to 30 wt.-%, more preferably in the range from 10 to 25 wt.-%, most preferably in the range from 12 to 20 wt.-%.

The heterophasic propylene-ethylene copolymer (HECO) preferably has an ethylene content of the soluble fraction (C2(SF)), according to CRYSTEX QC analysis, determined by FT-IR spectroscopy calibrated by quantitative $^{13}$C-NMR spectroscopy in the CRYSTEX QC method, in the range from 17.0 to 60.0 wt.-%, more preferably in the range from 20.0 to 50.0 wt.-%, most preferably in the range from 30.0 to 45.0 wt.-%.

The heterophasic propylene-ethylene copolymer (HECO) preferably has an intrinsic viscosity, determined according to DIN ISO 1628/1, of the soluble fraction (iV(SF)), according to CRYSTEX QC analysis, in the range from 1.20 to 4.50 dL/g, more preferably in the range from 1.70 to 4.00 dL/g, most preferably in the range from 2.20 to 3.30 dL/g.

The heterophasic propylene-ethylene copolymer (HECO) preferably has a crystalline fraction (CF) content, determined according to CRYSTEX QC analysis, in the range from 70 to 95 wt.-%, more preferably in the range from 75 to 90 wt.-%, most preferably in the range from 80 to 88 wt.-%.

The first heterophasic propylene-ethylene copolymer (HECO) preferably has an ethylene content of the crystalline fraction (C2(CF)), according to CRYSTEX QC analysis, determined by FT-IR spectroscopy calibrated by quantitative $^{13}$C-NMR spectroscopy in the CRYSTEX QC method, in the range from 1.0 to 8.0 wt.-%, more preferably in the range from 2.0 to 6.0 wt.-%, most preferably in the range from 2.5 to 5.0 wt.-%.

The heterophasic propylene-ethylene copolymer (HECO) preferably has an intrinsic viscosity, determined according to DIN ISO 1628/1, of the crystalline fraction (iV(CF)), according to CRYSTEX QC analysis, in the range from 1.20 to 4.50 dL/g, more preferably in the range from 2.00 to 4.00 dL/g, most preferably in the range from 2.50 to 3.50 dL/g.

It is also preferred that the ratio of the intrinsic viscosity of the soluble and crystalline fractions, (iV(SF)/iV(CF)), determined according to DIN ISO 1628/1, is in the range from 0.50 to 2.00, more preferably in the range from 0.75 to 1.50, most preferably in the range from 0.90 to 1.10.

**Multilayer film**

As described above, the multilayer film (F) comprises, in the given order, the following layers:

(A) a skin layer;
(B) a core layer; and
(C) a sealing layer.

Although other layers may be present, it is preferred that any further layers, if present, are between the skin layer (A) and the core layer (B) or between the core layer (B) and between the sealing layer (C), most preferably between the skin layer (A) and the core layer (B).

It is particularly preferred that no further layers are present, i.e. that the multilayer film (F) is a 3-layer film, consisting of layers (A), (B) and (C).

It is preferred that the multilayer film (F) has a thickness in the range from 20 to 150 $\mu$m, more preferably 30 to 100 $\mu$m, most preferably 50 to 80 $\mu$m.

It is preferred that:

a) the skin layer has a thickness in the range from 10 to 40% of the total thickness of the multilayer film (F);
b) the core layer has a thickness in the range from 30 to 70% of the total thickness of the multilayer film (F); and
c) the sealing layer has a thickness in the range from 10 to 40% of the total thickness of the multilayer film (F).

It is further preferred that:

a) the skin layer has a thickness in the range from 15 to 35% of the total thickness of the multilayer film (F);
b) the core layer has a thickness in the range from 35 to 65% of the total thickness of the multilayer film (F); and
c) the sealing layer has a thickness in the range from 15 to 35% of the total thickness of the multilayer film (F).

It is particularly preferred that:

a) the skin layer has a thickness in the range from 20 to 30% of the total thickness of the multilayer film (F);
b) the core layer has a thickness in the range from 40 to 60% of the total thickness of the multilayer film (F); and
c) the sealing layer has a thickness in the range from 20 to 30% of the total thickness of the multilayer film (F).

It is preferred that the multilayer film (F) has a tensile modulus in the machine direction (TM-MD), measured according to ISO 527-3, in the range from 700 to 1500 MPa, more preferably in the range from 800 to 1300 MPa, most preferably in the range from 850 to 1100 MPa.

It is preferred that the multilayer film (F) has a tensile modulus in the transverse direction (TM-TD), measured according to ISO 527-3, in the range from 700 to 1500 MPa, more preferably in the range from 800 to 1300 MPa, most preferably in the range from 850 to 1100 MPa.

It is preferred that the multilayer film (F) has a dart drop impact strength (DDI), measured according to ISO 7765-1, in the range from 100 to 600 g, more preferably in the range from 200 to 500 g, most preferably in the range from 300 to 400 g.

It is preferred that the multilayer film (F) has a haze value, determined according to ASTM D1003, in the range from 10 to 40%, more preferably in the range from 15 to 35%, most preferably in the range from 20 to 30%.

It is preferred that the multilayer film (F) has a sealing initiation temperature (SIT), determined according to the method specified in the measurement methods, in the range from 115 to 130 °C, more preferably in the range from 119 to 128 °C, most preferably in the range from 122 to 127 °C.

It is preferred that the multilayer film (F) has a seal strength before sterilization (b.s.), determined according to the method specified in the measurement methods, in the range from 15 to 40 N/mm, more preferably in the range from 18 to 35 N/mm, most preferably in the range from 20 to 30 N/mm.

It is preferred that the multilayer film (F) has a seal strength after sterilization (a.s.) determined according to the method specified in the measurement methods, in the range from 20 to 45 N/mm, more preferably in the range from 23 to 40 N/mm, most preferably in the range from 25 to 35 N/mm.

It is also preferred that the multilayer film (F) has a seal strength after sterilization (a.s.) that is at least 92%, more preferably at least 95%, most preferably at least 98%, of the seal strength before sterilization (b.s.), both determined according to the method specified in the measurement methods.

The seal strength after sterilization (a.s.) is typically not more than 125% of the seal strength before sterliziation.

## EXAMPLES

### 1. Measurement methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the $\alpha B2$ sites at 43.6 ppm accounting for the number of reporting sites per comonomer:

$$B = I_{\alpha B2} / 2$$

The amount of consecutively incorporated 1-butene in PBBP sequences was quantified using the integral of the $\alpha\alpha B2B2$ site at 40.5 ppm accounting for the number of reporting sites per comonomer:

$$BB = 2 * I_{\alpha\alpha B2B2}$$

In presence of BB the value of B must be corrected for the influence of the $\alpha B2$ sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the $S\beta\beta$ sites at 24.3 ppm accounting for the number of reporting sites per comonomer:

$$E = I_{S\beta\beta}$$

If characteristic signals corresponding to consecutive incorporation of ethylene in PEE sequence was observed the $S\beta\delta$ site at 27.0 ppm was used for quantification:

$$EE = I_{S\beta\delta}$$

Characteristic signals corresponding to regiodefects were observed {resconi00}. The presence of isolated 2,1-erythro regiodefects was indicated by the presence of the two methyl sites at 17.7 and 17.2 ppm, by the methylene site at 42.4 ppm and confirmed by other characteristic sites. The presence of 2,1 regiodefect adjacent an ethylene unit was indicated by the two inequivalent $S\alpha\beta$ signals at 34.8 ppm and 34.4 ppm respectively and the $T\gamma\gamma$ at 33.7 ppm.

The amount of isolated 2,1-erythro regiodefects ($P_{21e\ isolated}$) was quantified using the integral of the methylene site at 42.4 ppm ($I_{e9}$):

$$P_{21e\ isolated} = I_{e9}$$

If present the amount of 2,1 regiodefect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regiodefects:

$$E_{total} = E + EE + P_{E21}$$

The amount of propylene was quantified based on the $S\alpha\alpha$ methylene sites at 46.7 ppm including all additional propylene units not covered by $S\alpha\alpha$ e.g. the factor $3*P_{21e\ isolated}$ accounts for the three missing propylene units from isolated 2,1-erythro regiodefects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\text{-}\%] = 100 * fB$$

$$E\ [mol\text{-}\%] = 100 * fE$$

The weight percent comonomer incorporation was calculated from the mole fractions:

$$B \text{ [wt.-\%]} = 100 * ( fB * 56.11 ) / ( (fE * 28.05) + (fB * 56.11) + ((1-(fE+fB)) * 42.08) )$$

$$E \text{ [wt.-\%]} = 100 * ( fE * 28.05 ) / ( (fE * 28.05) + (fB * 56.11) + ((1-(fE+fB)) * 42.08) )$$

The mole percent of isolated 2,1-erythro regiodefects was quantified with respect to all propylene:

$$[21e] \text{ mol-\%} = 100 * P_{21e \text{ isolated}} / P_{total}$$

The mole percent of 2,1 regiodefects adjacent to ethylene was quantified with respect to all propylene:

$$[E21] \text{ mol-\%} = 100 * P_{E21} / P_{total}$$

The total amount of 2,1 defects was quantified as following:

$$[21] \text{ mol-\%} = [21e] + [E21]$$

Characteristic signals corresponding to other types of regiodefects (2,1-threo, 3,1 insertion) were not observed {resconi00}.
Literature (as referred to above):

| | |
|---|---|
| klimke06 | Klimke, K., Parkinson, M., Piel, C., Kaminsky, W., Spiess, H.W., Wilhelm, M., Macromol. Chem. Phys. 2006;207:382. |
| parkinson07 | Parkinson, M., Klimke, K., Spiess, H.W., Wilhelm, M., Macromol. Chem. Phys. 2007;208:2128. |
| pollard04 | Pollard, M., Klimke, K., Graf, R., Spiess, H.W., Wilhelm, M., Sperber, O., Piel, C., Kaminsky, W., Macromolecules 2004;37:813. |
| filip05 | Filip, X., Tripon, C., Filip, C., J. Mag. Resn. 2005, 176, 239 |
| griffin07 | Griffin, J.M., Tripon, C., Samoson, A., Filip, C., and Brown, S.P., Mag. Res. in Chem. 2007 45, S1, S198. |
| castignolles09 | Castignolles, P., Graf, R., Parkinson, M., Wilhelm, M., Gaborieau, M., Polymer 50 (2009) 2373. |
| resconi00 | Resconi, L., Cavallo, L., Fait, A., Piemontesi, F., Chem. Rev. 2000, 100, 1253. |
| brandolini01 | A.J. Brandolini, D.D. Hills, "NMR spectra of polymers and polymer additives", Marcel Deker Inc., 2000 |

## CRYSTEX QC analysis

### *Crystalline and soluble fractions method*

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)
The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.
The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3)^2 + f*\text{Abs(CH)}*\text{Abs(CH}_3)$$

(Equation 1)

$$\text{CH}_3/1000\text{C} = a + b*\text{Abs(CH)} + c*\text{Abs(CH}_3) + d*(\text{Abs(CH}_3)/\text{Abs(CH)}) + e*(\text{Abs(CH}_3)/\text{Abs(CH)})^2$$

(Equation 2)

The constants a to e for equation 1 and a to f for equation 2 were determined by using least square regression analysis.

The $\text{CH}_3/1000\text{C}$ is converted to the ethylene content in wt.-% using following relationship:

$$\text{Wt.-\% (Ethylene in EP Copolymers)} = 100 - \text{CH}_3/1000\text{TC} * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{Wt.-\% XS} = 1{,}01 * \text{Wt.-\% SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$\text{IV (dL/g)} = a * \text{Vsp/c} \qquad \text{(equation 5)}$$

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

**Intrinsic viscosity**

The intrinsic viscosity (iV) was measured according to DIN ISO 1628/1, October 1999, in Decalin at 135 °C.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $\text{MFR}_2$ of polypropylene was determined at a temperature of 230 °C and a load of 2.16 kg.

**Density:**

The density was measured according to ISO 1183-187. Sample preparation was done by compression moulding in accordance with ISO 1872-2:2007.

**The xylene soluble fraction at room temperature (XCS, wt.-%):** The amount of the polymer soluble in xylene was determined at 25 °C according to ISO 16152; 5th edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) were determined from the cooling step, while melting temperature ($T_m$) and melting enthalpy ($H_m$) were determined from the second heating step.

**DDI**

ISO 7765-1:1988 / Method A

This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

Standard conditions:

Conditioning time: > 96 h
Test temperature: 23 °C
Dart head material: phenolic
Dart diameter: 38 mm
Drop height: 660 mm

Results:

- Impact failure mass [g]
- Minimum thickness [mm]
- Maximum thickness [mm]

Testing according to ISO7765-1:1988 / Method A was carried out on films with a thickness as indicated and produced as described below under "Examples" and reported in gram (g).
DDI per unit thickness (in g/micron) is calculated by dividing DDI (in gram) to the thickness of film (in micron).

**Haze**

Haze was determined according to ASTM D1003-00 directly on the multilayer film produced in the experimental section.

**Sealing range experiments (SIT, max sealing force and SET)**

This method is used to determine the sealing window (sealing temperature range) of films. The procedure is similar to Hot-Tack test and is conducted in the same machine. In contrast to Hot-Tack, the sealing range determined corresponds to the strength of the seal after it had cooled down (a delay time of 30 s). The conditions used are as follows:

- Sealing time (1 s)
- Sealing pressure (0.4 N/mm$^2$)
- Delay time (30 s)
- Clamp separation rate (42 mm/s)

Sealing range = (Seal initiation temperature until seal end temperature)

The determined results provide a quantitatively useful indication of the sealing strength of the films and indicate the temperature range for optimal sealing.

The lower limit (Sealing Initiation Temperature - SIT) is the sealing temperature at which a sealing average force of 5 N is measured (i.e. the lowest temperature at which such force is measured). The upper limit (Sealing End Temperature - SET) is identified as the first sealing temperature where at least two specimens showed a burn-through failure mode. The maximum sealing force corresponds to the highest measured sealing force.

The temperature interval is set by default to 5 °C, but can be reduced to 1 °C when the curve shows a sharp increase or decrease in the force values between two temperature steps. This is done in order to represent a better curve profile.

Deviating from ASTM F 1921 - 12, the test parameters sealing pressure, cooling time and test speed are modified. The determination of the force/temperature curve is continued until thermal failure of the film. In addition to failure mode evaluations described in the standard, additional failure modes are used.

**Seal Strength**

The heat-seal experiments were performed on at least 3 film specimens of 85 mm wide by 200 mm length cut in the machine direction. The 5 mm x 150 mm Teflon coated steel heating bars were set to a temperature of 110 °C. Two films were sealed by positioning, one on top of the other using a 0.5 s sealing time and 0.67 N/ mm$^2$ pressure. The resulting sealed area was 85 mm x 5 mm. The specimens were then conditioned for 7 days ($\pm$ 24 h) at 23 °C ($\pm$ 2 °C) / 50 % RH ($\pm$ 10%). 10 specimens of 15 mm width were cut and tested in tensile mode at 23 °C ($\pm$ 2 °C) / 50 % RH ($\pm$ 10%) on a Universal Testing Machine (Zwick Z005). The clamping distance used was 100 mm, and a test speed of 200 mm/min. The yielding force and maximum force were measured for each test specimen.

Basic sealing:

- Film width: 85 mm
- Film length: > 200 mm
- Sealed seam width: 5 mm
- Sealing temperature: 110 °C
- Sealing pressure: 0,67 N/mm$^2$
- Sealing time: 0,5 s
- Sealing jaws: Teflon coated

Conditioning

- Conditioning time: 7 days ($\pm$ 24 h) at 23 °C ($\pm$ 2 °C) / 50 % RH ($\pm$ 10%)

Heat seal strength:

- Test temperature: 23 °C ($\pm$ 2 °C) / 50 % RH ($\pm$ 10%)
- Specimen width: 15 mm
- Gripping distance: 100 mm
- Test speed: 200 mm/min
- Test device: Universal Testing Machine

**Tensile Modulus**

Tensile modulus in machine and transverse direction was determined according to ISO 527-3 at 23 °C on the multilayer films produced in the experimental section. Testing was performed at a cross-head speed of 1 mm/min.

**Steam sterilization**

Steam sterilization was performed in a Systec D series machine (Systec Inc., USA). The samples were heated up at a heating rate of 5 °C/min starting from 23 °C. After having been kept for 30 min at 130 °C, they were removed immediately from the steam sterilizer and stored at room temperature before being further processed or tested.

### 2. Examples

### 2.1 Synthesis of heterophasic propylene-ethylene copolymers (RAHECO, HECO1 and HECO2

For the polymerization process of HECO2, a Ziegler-Natta type catalyst as used in for the inventive examples of WO2016/066446 A1 and prepolymerized with vinylcyclohexane to achieve nucleation with poly(vinylcycloxehane) was used.

Nucleation by prepolymerization with vinylcyclohexane is described in EP290256 B1 and EP2960279B1 in detail.

For the polymerizsation process of RAHECO and HECO 1, the same catalyst was used except that no pre-polymerization with vinylcyclohexane was undertaken (i.e. simply the catalyst used for the inventive examples of WO 2016/066446 A1 was used).

The catalyst systems defined above was used in combination with triethyl-aluminium (TEAL) as cocatalyst and dicyclopenta dienyl-dimethoxy silane (Donor D) as external donor.

The subsequent polymerizations have been effected under the following conditions.

Table 1 Polymerization conditions for the heterophasic propylene-ethylene copolymers

| | | RAHECO | HECO1 | HECO2 |
|---|---|---|---|---|
| **Prepolymerization** | | | | |
| [Co]/[ED] | [mol/mol] | 9.5 | 10.0 | 8.0 |
| [Co]/[Ti] | [mol/mol] | 180 | 200 | 173 |
| Temperature | [°C] | 30 | 30 | 30 |
| Residence time | [min] | 15 | 15 | 15 |
| **Loop reactor** | | | | |
| Temperature | [°C] | 80 | 80 | 80 |
| Split | [wt.-%] | 36 | 41 | 39 |
| H2/C3 | [mol/kmol] | 0.24 | 0.30 | 0.40 |
| C2/C3 | [mol/kmol] | 3.5 | 0.0 | 0.0 |
| $MFR_2$ | [g/10 min] | 0.70 | 0.85 | 2.40 |
| C2 | [wt.-%] | 2.5 | 0.0 | 0.0 |
| **1st Gas phase reactor** | | | | |
| Temperature | [°C] | 80 | 80 | 80 |
| Split | [wt.-%] | 46 | 42 | 50 |
| H2/C3 | [mol/kmol] | 2.3 | 2.9 | 7.0 |
| C2/C3 | [mol/kmol] | 5.3 | 0.0 | 0.0 |
| $MFR_2$ | [g/10 min] | 0.70 | 0.85 | 2.4 |
| XCS | [wt.-%] | 8.0 | 1.7 | 1.8 |
| C2 | [wt.-%] | 4.0 | 0.0 | 0.0 |
| **2nd Gas phase reactor** | | | | |
| Temperature | [°C] | 75 | 75 | 75 |
| Split | [wt.-%] | 18 | 17 | 11 |
| H2/C3 | [mol/kmol] | 80 | 60 | 116 |
| C2/C3 | [mol/kmol] | 290 | 480 | 210 |
| $MFR_2$ | [g/10 min] | 0.80 | 0.85 | 3.00 |

(continued)

| 2nd Gas phase reactor | | | | |
|---|---|---|---|---|
| C2 | [wt.-%] | 9.5 | 7.7 | 4.9 |
| **Final Properties (pellet)** | | | | |
| MFR$_2$ | [g/10 min] | 0.80 | 0.85 | 3.00 |
| C2 | [wt.-%] | 9.5 | 7.7 | 4.9 |
| SF | [wt.-%] | 21.1 | 14.4 | 11.2 |
| C2(SF) | [wt.-%] | 30.2 | 37.5 | 29.1 |
| iV(SF) | [dL/g] | 2.89 | 2.83 | 2.02 |
| CF | [wt.-%] | 78.2 | 85.6 | 88.8 |
| C2(CF) | [wt.-%] | 4.9 | 3.4 | 2.2 |
| iV(CF) | [dL/g] | 3.08 | 3.02 | 2.66 |
| iV(SF)/iV(CF) | [-] | 0.94 | 0.94 | 0.76 |
| Tm | [°C] | 141 | 165 | 168 |

The matrices of each of RAHECO, HECO1 and HECO2 are free from 2,1-regiodefects.

RAHECO was compounded in a co-rotating twin-screw extruder Coperion ZSK 47 at 220 °C with 0.19 wt.-% of an antioxidant blend (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (CAS-no.1592-23-0, commercially available from Faci, Italy).

HECO1 was compounded in a co-rotating twin-screw extruder Coperion ZSK 47 at 220 °C with 0.15 wt.-% of pentaerythrityl-tetrakis(3-(3',5'-di-tert. butyl-4-hydroxyphenyl)-propionate (available as Irganox 1010 from BASF AG, Germany; CAS-no. 6683-19-8); and 0.05 wt.-% of Ca-stearate (CAS-no.1592-23-0, commercially available from Faci, Italy).

HECO2 was compounded in a co-rotating twin-screw extruder Coperion ZSK 47 at 220 °C with 0.05 wt.-% of pentaerythrityl-tetrakis(3-(3',5'-di-tert. butyl-4-hydroxyphenyl)-propionate (available as Irganox 1010 from BASF AG, Germany; CAS-no. 6683-19-8); 0.10 wt.-% of tris (2,4-di-t-butylphenyl) phosphite (available as Irgafos 168 from BASF AG, Germany; CAS-no. 31570-04-4); 0.03 wt.-% of synthetic hydrotalcite (available as Hycite 713 from BASF AG, Germany; CAS-no. 11097-59-9); and 0.05 wt.-% of a nucleating agent (available as Hyperform HPN-20E from Milliken, USA; CAS-no (of main component) 491589-22-1).

### 2.2 Propylene-ethylene random copolymers (R-PP1 and R-PP2)

The catalyst used in the polymerization process for the propylene-ethylene random copolymers R-PP1 and R-PP2 was prepared as follows:

The metallocene MC1 (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650.

The catalyst was prepared using metallocene MC1 and a catalyst system of MAO and trityl tetrakis(pentafluorophenyl)borate according to Catalyst 3 of WO 2015/11135 with the proviso that the surfactant is 2,3,3,3-tetrafluoro-2-(1,1,2,2,3,3,3-heptafluoropropoxy)-1-propanol.

**Table 2** Polymerization conditions for the propylene-ethylene random copolymers

| | | R-PP1 | R-PP2 |
|---|---|---|---|
| **Prepolymerization** | | | |
| Temperature | °C | 17 | 20 |
| Residence time | min | 0.4 | 0.4 |
| **Loop reactor** | | | |
| Temperature | °C | 68 | 65 |
| Feed H2/C3 ratio | [mol/kmol] | 0.1 | 0.1 |

(continued)

| Loop reactor | | | |
|---|---|---|---|
| Feed C2/C3 ratio | [mol/kmol] | 15.2 | 32.1 |
| Split | [wt.-%] | 63 | 52 |
| $MFR_2$ | [g/10 min] | 4.48 | 2.67 |
| C2 content | [wt.-%] | 0.51 | 2.20 |
| **First GPR** | | | |
| Temperature | [°C] | 83 | 83 |
| H2/C3 ratio | [mol/kmol] | 0.7 | 1.2 |
| C2/C3 ratio | [mol/kmol] | 97.6 | 119.8 |
| Split | [wt.-%] | 37 | 48 |
| **Pellet** | | | |
| C2 total | [wt.-%] | 1.1 | 2.5 |
| 2,1-regiodefects | [mol-%] | 0.6 | 0.5 |
| $MFR_2$ | [g/10min] | 2.0 | 1.7 |
| Tm | [°C] | 145 | 128 |
| XCS | [wt.-%] | 0.51 | 0.57 |

R-PP1 was compounded in a co-rotating twin-screw extruder Coperion ZSK 47 at 220 °C with 0.05 wt.-% of pentaerythrityl-tetrakis(3-(3',5'-di-tert. butyl-4-hydroxyphenyl)-propionate (available as Irganox 1010 from BASF AG, Germany; CAS-no. 6683-19-8); 0.05 wt.-% of tris (2,4-di-t-butylphenyl) phosphite (available as Irgafos 168 from BASF AG, Germany; CAS-no. 31570-04-4); 0.03 wt.-% of synthetic hydrotalcite (available as Hycite 713 from BASF AG, Germany; CAS-no. 11097-59-9); and 0.08 wt.-% of a nucleating agent (available as ADK Stab NA-71 from Adeka Corporation, Germany; CAS-no (of main component) 85209-93-4).

R-PP2 was compounded in a co-rotating twin-screw extruder Coperion ZSK 47 at 220 °C with 0.20 wt.-% of erucamide (available as Crodamide ER beads from Croda International, UK; CAS-no. 112-84-5); 0.18 wt.-% of amorphous silica (available as Sylobloc 45B from Grace GmbH, Germany; CAS-no. 7631-86-9); 0.10 wt.-% of an antioxidant blend (available as Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); and 0.04 wt.-% of Ca-stearate (available from Faci, Italy; CAS-no.1592-23-0) and 2.0 wt.-% of the propylene homopolymer described in EP 3 184 587, Table 1, IE2.

Furthermore, R-PP2 was visbroken using 2,5-bis(tert-butylperoxy)-2,5-dimethylhexane to achieve an $MFR_2$ of 11.0 g/10 min. The XCS, Tm, C2(total) and content of 2,1-regiodefects were not altered during the visbreaking process.

### 2.3 Compounding of Inventive and Comparative Multilayer films

The compositions for each layer were prepared based on the recipes indicated in Table 3 by compounding in a co-rotating twin-screw extruder Coperion ZSK 40 at 220 °C.

3-layer films are produced on Collin lab scale blown film line, film thickness 60 μm, BUR 1:2.5, melt temperature 210°C. The film thickness distribution is skin 25%, core 50%, and sealing layer 25%.

The properties of the inventive and comparative compositions are given in Table 4.

**Table 3** Recipes for inventive and comparative examples

| | | | CE1 | IE1 | IE2 | IE3 |
|---|---|---|---|---|---|---|
| Skin layer | RAHECO | [wt.-%] | 30 | 30 | 30 | 30 |
| | HECO1 | [wt.-%] | 70 | 70 | 70 | 70 |
| Core layer | RAHECO | [wt.-%] | 30 | 30 | 30 | 30 |
| | HECO1 | [wt.-%] | 70 | 70 | 70 | 70 |

(continued)

| | | | CE1 | IE1 | IE2 | IE3 |
|---|---|---|---|---|---|---|
| Sealing layer | RAHECO | [wt.-%] | - | 40 | 40 | 40 |
| | R-PP1 | [wt.-%] | - | 16 | 30 | 44 |
| | R-PP2 | [wt.-%] | - | 44 | 30 | 16 |
| | HECO2 | [wt.-%] | 100 | - | - | - |

**Table 4** Properties of the inventive and comparative multilayer films

| | | CE1 | IE1 | IE2 | IE3 |
|---|---|---|---|---|---|
| Tensile Modulus (MD) | [MPa] | 1140 | 860 | 970 | 860 |
| Tensile Modulus (TD) | [MPa] | 1100 | 850 | 1010 | 950 |
| DDI | [g] | 173 | 386 | 138 | 226 |
| Haze | [%] | 27.6 | 32.8 | 28.5 | 31.2 |
| SIT | [°C] | 145 | 122 | 125 | 125 |
| Seal strength (b.s.) | [N/15mm] | 6.0 | 22.6 | 25.6 | 25.5 |
| Seal strength (a.s.) | [N/15mm] | 5.4 | 27.1 | 30.3 | 29.4 |
| Seal strength (a.s.)/Seal strength (b.s.) | [%] | 90 | 120 | 118 | 115 |

As can be seen from Table 4, the inventive multilayer films have significantly reduced SIT values, as well as drastically improved seal strength, both before and after sterilization, whilst maintaining acceptable mechanical and optical properties. Furthermore, the seal strength after sterilization is in all cases higher than before sterilization, in contrast to the comparative example, which experiences a reduction in seal strength.

**Claims**

1.  A multilayer film (F), comprising, in the given order, the following layers:

(A) a skin layer, comprising at least 90 wt.-%, based on the total weight of the skin layer, of a polypropylene or mixture of polypropylenes;
(B) a core layer, comprising at least 90 wt.-%, based on the total weight of the core layer, of a polypropylene or mixture of polypropylenes; and
(C) a sealing layer, comprising at least 90 wt.-%, based on the total weight of the sealing layer, of a polypropylene composition (PC) comprising the following components:

i) 20 to 70 wt.-%, based on the total weight of the polypropylene composition (PC), of a random-heterophasic propylene-ethylene copolymer (RAHECO), having a melt flow rate ($MFR_2$), determined according to ISO 1133 at 230 °C and 2.16 kg, in the range from 0.1 to 10.0 g/10 min, comprising:

a) a crystalline matrix (M) being a propylene-ethylene random copolymer; and
b) an amorphous propylene-ethylene elastomer (E);

ii) 10 to 50 wt.-%, based on the total weight of the polypropylene composition (PC), of a first propylene-ethylene random copolymer (R-PP1) having a melt flow rate ($MFR_2$), determined according to ISO 1133 at 230 °C and 2.16 kg, in the range from 1.0 to 6.0 g/10 min; and
iii) 10 to 50 wt.-%, based on the total weight of the polypropylene composition (PC), of a second propylene-ethylene random copolymer (R-PP2) having a melt flow rate ($MFR_2$), determined according to ISO 1133 at 230 °C and 2.16 kg, in the range from 7.0 to 20 g/10 min,

wherein the combined amounts of the random-heterophasic propylene-ethylene copolymer (RAHECO), the first propylene-ethylene random copolymer (R-PP1) and the second propylene-ethylene random copolymer (R-PP2) are at least 90 wt.-%, relative to the total weight of the polypropylene composition (PC).

2. The multilayer film (F) according to claim 1, wherein the random-heterophasic propylene-ethylene copolymer (RAHECO) has one or more, preferably all, of the following properties:

a) a soluble fraction (SF) content in the range from 10 to 45 wt.-% and a crystalline fraction (CF) content in the range from 55 to 90 wt.-%, both determined according to CRYSTEX QC analysis as described in the description
b) a melting temperature (Tm), determined by differential scanning calorimetry (DSC), in the range from 130 to 155 °C; and
c) the crystalline matrix (M) being free from 2,1-regiodefects, as determined by $^{13}$C-NMR spectroscopy as described in the description.

3. The multilayer film (F) according to claim 1 or claim 2, wherein the random-heterophasic propylene-ethylene copolymer (RAHECO) has one or more, preferably all, of the following properties:

a) an ethylene content (C2(total)), determined by FT-IR spectroscopy calibrated by quantitative $^{13}$C-NMR spectroscopy in the CRYSTEX QC method, in the range from 3.0 to 15.0 wt.-%;
b) an ethylene content of the soluble fraction (C2(SF)), according to CRYSTEX QC analysis, determined by FT-IR spectroscopy calibrated by quantitative $^{13}$C-NMR spectroscopy in the CRYSTEX QC method, in the range from 17.0 to 60.0 wt.-%; and
c) an ethylene content of the crystalline fraction (C2(CF)), according to CRYSTEX QC analysis, determined by FT-IR spectroscopy calibrated by quantitative $^{13}$C-NMR spectroscopy in the CRYSTEX QC method, in the range from 1.0 to 8.0 wt.-%.

4. The multilayer film (F) according to any one of the preceding claims, wherein the random-heterophasic propylene-ethylene copolymer (RAHECO) has one or more, preferably all, of the following properties:

a) an intrinsic viscosity of the soluble fraction (iV(SF)) according to CRYSTEX QC analysis, determined according to DIN ISO 1628/1, in the range from 1.20 to 4.50 dL/g;
b) an intrinsic viscosity of the crystalline fraction (iV(CF)) according to CRYSTEX QC analysis, determined according to DIN ISO 1628/1, in the range from 1.20 to 4.50 dL/g; and
c) an intrinsic viscosity ratio (iV(SF)/iV(CF)), determined according to DIN ISO 1628/1, in the range from 0.50 to 2.00.

5. The multilayer film (F) according to any one of the preceding claims, wherein the first propylene-ethylene random copolymer (R-PP1) has one or more, preferably all, of the following properties:

a) an ethylene content (C2), determined by quantitative $^{13}$C-NMR spectroscopy, in the range from 1.0 to 5.5 wt.-%;
b) a xylene cold soluble (XCS) content, determined according to ISO 16152 analysis, in the range from 0.2 to 5.0 wt.-%;
c) a melting temperature (Tm), determined by differential scanning calorimetry (DSC), in the range from 130 to 155 °C;
d) a crystallization temperature (Tc), determined by differential scanning calorimetry (DSC), in the range from 110 to 125 °C; and
e) a content of 2,1-regiodefects, as determined by $^{13}$C-NMR spectroscopy, in the range from 0.05 to 1.40 mol-%.

6. The multilayer film (F) according to any one of the preceding claims, wherein the second propylene-ethylene random copolymer (R-PP2) has one or more, preferably all, of the following properties:

a) an ethylene content (C2), determined by quantitative $^{13}$C-NMR spectroscopy, in the range from 1.0 to 5.5 wt.-%;
b) a xylene cold soluble (XCS) content, determined according to ISO 16152 analysis, in the range from 0.2 to 5.0 wt.-%;
c) a melting temperature (Tm), determined by differential scanning calorimetry (DSC), in the range from 125 to 145 °C;
d) a crystallization temperature (Tc), determined by differential scanning calorimetry (DSC), in the range from 100 to 120 °C; and

e) a content of 2,1-regiodefects, as determined by $^{13}$C-NMR spectroscopy, in the range from 0.05 to 1.40 mol-%.

7. The multilayer film (F) according to any one of the preceding claims, wherein:

a) the skin layer has a thickness in the range from 10 to 40% of the total thickness of the multilayer film (F);
b) the core layer has a thickness in the range from 30 to 70% of the total thickness of the multilayer film (F); and
c) the sealing layer has a thickness in the range from 10 to 40% of the total thickness of the multilayer film (F).

8. The multilayer film (F) according to any one of the preceding claims, wherein at least one of, preferably both of, the skin layer and the core layer comprise at least 90 wt.-% of a polypropylene composition (PC') comprising the following components:

i) from 15 to 45 wt.-%, based on the total weight of the polypropylene composition (PC'), of a random-heterophasic propylene-ethylene copolymer (RAHECO') having a melting temperature (Tm), determined by differential scanning calorimetry (DSC), in the range from 130 to 155 °C,
wherein the random-heterophasic propylene-ethylene copolymer (RAHECO') comprises:

a1) a crystalline matrix (M) being a propylene-ethylene random copolymer, preferably being free from 2,1-regiodefects, as determined by quantitative $^{13}$C-NMR spectroscopy; and
b1) an amorphous propylene-ethylene elastomer (E), and

ii) from 55 to 85 wt.-%, based on the total weight of the polypropylene composition (PC'), of a heterophasic propylene-ethylene copolymer (HECO) having a melting temperature (Tm), determined by differential scanning calorimetry (DSC), in the range from 150 to 170 °C,
wherein the heterophasic propylene-ethylene copolymer (HECO) comprises:

a2) a crystalline matrix (M) being a propylene homopolymer, preferably being free from 2,1-regiodefects, as determined by quantitative $^{13}$C-NMR spectroscopy; and
b2) an amorphous propylene-ethylene elastomer (E),

wherein the combined amounts of the random-heterophasic propylene-ethylene copolymer (RAHECO') and the heterophasic propylene-ethylene copolymer (HECO) are at least 90 wt.-%, relative to the total weight of the polypropylene composition (PC').

9. The multilayer film (F) according to claim 8, wherein the random-heterophasic propylene-ethylene copolymer (RAHECO') has one or more, preferably all, of the following properties:

a) a melt flow rate (MFR$_2$), determined according to ISO 1133 at 230 °C and 2.16 kg, in the range from 0.1 to 10.0 g/10 min;
b) a soluble fraction (SF) content in the range from 10 to 45 wt.-% and a crystalline fraction (CF) content in the range from 55 to 90 wt.-%, both determined according to CRYSTEX QC analysis;
c) an ethylene content (C2(total)), determined by FT-IR spectroscopy calibrated by quantitative $^{13}$C-NMR spectroscopy in the CRYSTEX QC method, in the range from 3.0 to 15.0 wt.-%;
d) an ethylene content of the soluble fraction (C2(SF)), according to CRYSTEX QC analysis, determined by FT-IR spectroscopy calibrated by quantitative $^{13}$C-NMR spectroscopy in the CRYSTEX QC method, in the range from 17.0 to 60.0 wt.-%;
e) an ethylene content of the crystalline fraction (C2(CF)), according to CRYSTEX QC analysis, determined by FT-IR spectroscopy calibrated by quantitative $^{13}$C-NMR spectroscopy in the CRYSTEX QC method, in the range from 1.0 to 8.0 wt.-%;
f) an intrinsic viscosity of the soluble fraction (iV(SF)) according to CRYSTEX QC analysis, determined according to DIN ISO 1628/1, in the range from 1.20 to 4.50 dL/g;
g) an intrinsic viscosity of the crystalline fraction (iV(CF)) according to CRYSTEX QC analysis, determined according to DIN ISO 1628/1, in the range from 1.20 to 4.50 dL/g; and
h) an intrinsic viscosity ratio (iV(SF)/iV(CF)), determined according to DIN ISO 1628/1, in the range from 0.50 to 2.00.

10. The multilayer film (F) according to claim 8 or claim 9, wherein the heterophasic propylene-ethylene copolymer (HECO) has one or more, preferably all, of the following properties:

a) a melt flow rate ($MFR_2$), determined according to ISO 1133 at 230 °C and 2.16 kg, in the range from 0.1 to 6.0 g/10 min;

b) a soluble fraction (SF) content in the range from 5 to 30 wt.-% and a crystalline fraction (CF) content in the range from 70 to 95 wt.-%, both determined according to CRYSTEX QC analysis;

c) an ethylene content (C2(total)), determined by FT-IR spectroscopy calibrated by quantitative $^{13}$C-NMR spectroscopy in the CRYSTEX QC method, in the range from 3.0 to 15.0 wt.-%;

d) an ethylene content of the soluble fraction (C2(SF)), according to CRYSTEX QC analysis, determined by FT-IR spectroscopy calibrated by quantitative $^{13}$C-NMR spectroscopy in the CRYSTEX QC method, in the range from 17.0 to 60.0 wt.-%;

e) an ethylene content of the crystalline fraction (C2(CF)), according to CRYSTEX QC analysis, determined by FT-IR spectroscopy calibrated by quantitative $^{13}$C-NMR spectroscopy in the CRYSTEX QC method, in the range from 1.0 to 8.0 wt.-%;

f) an intrinsic viscosity of the soluble fraction (iV(SF)) according to CRYSTEX QC analysis, determined according to DIN ISO 1628/1, in the range from 1.20 to 4.50 dL/g; and

g) an intrinsic viscosity of the crystalline fraction (iV(CF)) according to CRYSTEX QC analysis, determined according to DIN ISO 1628/1, in the range from 1.20 to 4.50 dL/g.

11. The multilayer film (F) according to any one of claims 8 to 10, wherein the random-heterophasic propylene-ethylene copolymer (RAHECO') is the same as the random-heterophasic propylene-ethylene copolymer (RAHECO).

12. The multilayer film (F) according to any one of the preceding claims, having a thickness in the range from 20 to 150 μm.

13. The multilayer film (F) according to any one of the preceding claims, having one or more, preferably all, of the following properties:

a) a tensile modulus in the machine direction (TM-MD), measured according to ISO 527-3, in the range from 700 to 1500 MPa;

b) a tensile modulus in the transverse direction (TM-TD), measured according to ISO 527-3, in the range from 700 to 1500 MPa; and

c) a dart drop impact strength (DDI), measured according to ISO 7765-1, in the range from 100 to 600 g.

14. The multilayer film (F) according to any one of the preceding claims, having a haze value, determined according to ASTM D1003, in the range from 10 to 40%.

15. The multilayer film (F) according to any one of the preceding claims, having one or more, preferably all, of the following properties:

a) a sealing initiation temperature (SIT), determined according to the method specified in the measurement methods, in the range from 115 to 130 °C;

b) a seal strength before sterilization (b.s.), determined according to the method specified in the measurement methods, in the range from 15 to 40 N/mm; and

c) a seal strength after sterilization (a.s.), determined according to the method specified in the measurement methods, in the range from 20 to 45 N/mm.

**Patentansprüche**

1. Mehrschichtfilm (F), umfassend, in der angegebenen Reihenfolge, die folgenden Schichten:

(A) eine Außenschicht, umfassend mindestens 90 Gewichtsprozent Polypropylen oder einer Mischung von Polypropylenen, bezogen auf das Gesamtgewicht der Außenschicht,

(B) eine Kernschicht, bestehend aus mindestens 90 Gewichtsprozent Polypropylen oder einer Mischung von Polypropylenen, bezogen auf das Gesamtgewicht der Kernschicht, und

(C) eine Siegelschicht, die mindestens 90 Gewichtsprozent, bezogen auf das Gesamtgewicht der Siegelschicht, einer Polypropylen-Zusammensetzung (PC) enthält, umfassend die folgenden Komponenten:

i) 20 bis 70 Gewichtsprozent, bezogen auf das Gesamtgewicht der Polypropylen-Zusammensetzung (PC), eines statistischen heterophasischen Propylen-Ethylen-Copolymers (RAHECO), das einen Schmelzindex

(MFR$_2$), bestimmt nach ISO 1133 bei 230 °C und 2,16 kg, im Bereich von 0,1 bis 10,0 g/10 min aufweist, umfassend:

a) eine kristalline Matrix (M), die ein statistisches Propylen-Ethylen-Copolymer ist, und
b) ein amorphes Propylen-Ethylen-Elastomer (E),

ii) 10 bis 50 Gewichtsprozent, bezogen auf das Gesamtgewicht der Polypropylen-Zusammensetzung (PC), eines ersten statistischen Propylen-Ethylen-Copolymers (R-PP1), das einem Schmelzindex (MFR$_2$), bestimmt gemäß ISO 1133 bei 230 °C und 2,16 kg, im Bereich von 1,0 bis 6,0 g/10 min aufweist, und
iii) 10 bis 50 Gewichtsprozent, bezogen auf das Gesamtgewicht der Polypropylen-Zusammensetzung (PC), eines zweiten statistischen Propylen-Ethylen-Copolymers (R-PP2), das einen Schmelzindex (MFR$_2$), bestimmt nach ISO 1133 bei 230 °C und 2,16 kg, im Bereich von 7,0 bis 20 g/10 min aufweist,

wobei die kombinierten Mengen des statistischen heterophasigen Propylen-Ethylen-Copolymers (RAHECO), des ersten statistischen Propylen-Ethylen-Copolymers (R-PP1) und des zweiten statistischen Propylen-Ethylen-Copolymers (R-PP2) mindestens 90 Gewichtsprozent, bezogen auf das Gesamtgewicht der Polypropylen-Zusammensetzung (PC), betragen.

2. Mehrschichtfilm (F) nach Anspruch 1, wobei das statistische heterophasische Propylen-Ethylen-Copolymer (RAHECO) eine oder mehrere, bevorzugt alle, der folgenden Eigenschaften aufweist:

a) einen Gehalt an löslicher Fraktion (SF) im Bereich von 10 bis 45 Gewichtsprozent und an kristalliner Fraktion (CF) im Bereich von 55 bis 90 Gewichtsprozent, beide ermittelt mittels CRYSTEX QC-Analyse wie in der Beschreibung beschrieben,
b) eine Schmelztemperatur (Tm), ermittelt mittels Differential Scanning Calorimetry (DSC), im Bereich von 130 bis 155 °C, und
c) die kristalline Matrix (M) ist frei von 2,1-Regiodefekten, ermittelt mittels $^{13}$C-NMR-Spektroskopie wie in der Beschreibung beschrieben.

3. Mehrschichtfilm (F) nach Anspruch 1 oder 2, wobei das statistische heterophasische Propylen-Ethylen-Copolymer (RAHECO) eine oder mehrere, bevorzugt alle, der folgenden Eigenschaften aufweist:

a) einen Ethylen-Gehalt (C2(gesamt)), bestimmt durch FT-IR-Spektroskopie, kalibriert durch quantitative $^{13}$C-NMR-Spektroskopie im CRYSTEX QC-Verfahren, im Bereich von 3,0 bis 15,0 Gewichtsprozent,
b) einen Ethylen-Gehalt der löslichen Fraktion (C2(SF)) gemäß CRYSTEX QC-Analyse, bestimmt durch FT-IR-Spektroskopie, kalibriert durch quantitative $^{13}$C-NMR-Spektroskopie im CRYSTEX QC-Verfahren, im Bereich von 17,0 bis 60,0 Gewichtsprozent, und
c) einen Ethylen-Gehalt der kristallinen Fraktion (C2(CF)) gemäß CRYSTEX QC-Analyse, bestimmt durch FT-IR-Spektroskopie, kalibriert durch quantitative $^{13}$C-NMR-Spektroskopie im CRYSTEX QC-Verfahren, im Bereich von 1,0 bis 8,0 Gewichtsprozent.

4. Mehrschichtfilm (F) nach einem der vorhergehenden Ansprüche, wobei das statistische heterophasige Propylen-Ethylen-Copolymer (RAHECO) eine oder mehrere, bevorzugt alle, der folgenden Eigenschaften aufweist:

a) eine intrinsische Viskosität der löslichen Fraktion (iV(SF)) gemäß CRYSTEX QC-Analyse, bestimmt nach DIN ISO 1628/1, im Bereich von 1,20 bis 4,50 dL/g,
b) eine intrinsische Viskosität der kristallinen Fraktion (iV(CF)) gemäß CRYSTEX QC-Analyse, bestimmt nach DIN ISO 1628/1, im Bereich von 1,20 bis 4,50 dL/g, und
c) ein Verhältnis der intrinsischen Viskositäten (iV(SF)/iV(CF)), bestimmt nach DIN ISO 1628/1, im Bereich von 0,50 bis 2,00.

5. Mehrschichtfilm (F) nach einem der vorhergehenden Ansprüche, wobei das erste statistische Propylen-Ethylen-Copolymer (R-PP1) eine oder mehrere, bevorzugt alle, der folgenden Eigenschaften aufweist:

a) einen Ethylen-Gehalt (C2), bestimmt durch quantitative $^{13}$C-NMR-Spektroskopie, im Bereich von 1,0 bis 5,5 Gewichtsprozent,
b) einen in kaltem Xylol löslichen (XCS) Gehalt, ermittelt nach ISO 16152-Analyse, im Bereich von 0,2 bis 5,0 Gewichtsprozent,

c) eine Schmelztemperatur (Tm), ermittelt durch Differenzkalorimetrie (DSC), im Bereich von 130 bis 155 °C,

d) eine Kristallisationstemperatur (Tc), ermittelt durch Differenzkalorimetrie (DSC), im Bereich von 110 bis 125 °C und

e) einen Gehalt an 2,1-Regiodefekten, ermittelt durch $^{13}$C-NMR-Spektroskopie, im Bereich von 0,05 bis 1,40 Mol-%.

6. Mehrschichtfilm (F) nach einem der vorhergehenden Ansprüche, wobei das zweite statistische Propylen-Ethylen-Copolymer (R-PP2) eine oder mehrere, bevorzugt alle, der folgenden Eigenschaften aufweist:

a) einen Ethylen-Gehalt (C2), bestimmt durch quantitative $^{13}$C-NMR-Spektroskopie, im Bereich von 1,0 bis 5,5 Gewichtsprozent,

b) einen kaltem Xylol löslichen (XCS) Gehalt, bestimmt gemäß ISO 16152-Analyse, im Bereich von 0,2 bis 5,0 Gewichtsprozent,

c) eine Schmelztemperatur (Tm), bestimmt durch Differenzkalorimetrie (DSC), im Bereich von 125 bis 145 °C,

d) eine Kristallisationstemperatur (Tc), bestimmt durch Differenzkalorimetrie (DSC), im Bereich von 100 bis 120 °C, und

e) einen Gehalt an 2,1-Regiodefekten, ermittelt durch $^{13}$C-NMR-Spektroskopie, im Bereich von 0,05 bis 1,40 Mol-%.

7. Mehrschichtfilm (F) nach einem der vorhergehenden Ansprüche, wobei:

a) die Außenschicht eine Dicke im Bereich von 10 bis 40 % der Gesamtdicke der Mehrschichtfilm (F) aufweist,

b) die Kernschicht eine Dicke im Bereich von 30 bis 70 % der Gesamtdicke der Mehrschichtfilm (F) aufweist, und

c) die Siegelschicht eine Dicke im Bereich von 10 bis 40 % der Gesamtdicke der Mehrschichtfilm (F) aufweist.

8. Mehrschichtfilm (F) nach einem der vorhergehenden Ansprüche, wobei mindestens eine, bevorzugt beide, der Außen- und der Kernschicht mindestens 90 Gewichtsprozent einer Polypropylen-Zusammensetzung (PC') enthält, umfassend die folgenden Komponenten:

i) 15 bis 45 Gewichtsprozent, bezogen auf das Gesamtgewicht der Polypropylen-Zusammensetzung (PC'), eines statistischen heterophasigen Propylen-Ethylen-Copolymers (RAHECO'), das eine Schmelztemperatur (Tm), bestimmt durch Differenzial-Scanning-Kalorimetrie (DSC), im Bereich von 130 bis 155 °C aufweist, wobei das statistische heterophasige Propylen-Ethylen-Copolymer (RAHECO') umfasst:

a1) eine kristalline Matrix (M), die ein statistisches Propylen-Ethylen-Copolymer ist, das bevorzugt frei von 2,1-Regiodefekten ist, bestimmt durch quantitative $^{13}$C-NMR-Spektroskopie, und

b1) ein amorphes Propylen-Ethylen-Elastomer (E) und

ii) 55 bis 85 Gewichtsprozent, bezogen auf das Gesamtgewicht der Polypropylen-Zusammensetzung (PC'), eines heterophasigen Propylen-Ethylen-Copolymers (HECO), das eine Schmelztemperatur (Tm), bestimmt durch Differenzial-Scanning-Kalorimetrie (DSC), im Bereich von 150 bis 170 °C aufweist, wobei das heterophasige Propylen-Ethylen-Copolymer (HECO) umfasst:

a2) eine kristalline Matrix (M), die ein Propylen-Homopolymer ist, das bevorzugt frei von 2,1-Regiodefekten ist, bestimmt durch quantitative $^{13}$C-NMR-Spektroskopie, und

b2) ein amorphes Propylen-Ethylen-Elastomer (E),

wobei die kombinierten Mengen des statistischen heterophasischen Propylen-Ethylen-Copolymers (RAHECO') und des heterophasischen Propylen-EthylenCopolymers (HECO) mindestens 90 Gewichtsprozent, bezogen auf das Gesamtgewicht der Polypropylen-Zusammensetzung (PC'), betragen.

9. Mehrschichtfilm (F) nach Anspruch 8, wobei das statistische heterophasische Propylen-Ethylen-Copolymer (RAHECO') eine oder mehrere, bevorzugt alle, der folgenden Eigenschaften aufweist:

a) einen Schmelzindex (MFR$_2$), bestimmt nach ISO 1133 bei 230 °C und 2,16 kg, im Bereich von 0,1 bis 10,0 g/10 min,

b) einen Gehalt an löslicher Fraktion (SF) im Bereich von 10 bis 45 Gewichtsprozent und an kristalliner Fraktion (CF) im Bereich von 55 bis 90 Gewichtsprozent, beide ermittelt mittels CRYSTEX QC-Analyse,

c) einen Ethylen-Gehalt (C2(gesamt)), ermittelt mittels FT-IR-Spektroskopie, kalibriert mittels quantitativer $^{13}$C-NMR-Spektroskopie im CRYSTEX QC-Verfahren, im Bereich von 3,0 bis 15,0 Gewichtsprozent,

d) einen Ethylen-Gehalt der löslichen Fraktion (C2(SF)) gemäß CRYSTEX QC-Analyse, ermittelt mittels FT-IR-Spektroskopie, kalibriert mittels quantitativer $^{13}$C NMR-Spektroskopie im CRYSTEX QC-Verfahren, im Bereich von 17,0 bis 60,0 Gewichtsprozent,

e) einen Ethylen-Gehalt der kristallinen Fraktion ($C_2$(CF)) gemäß CRYSTEX QC-Analyse, ermittelt mittels FT-IR-Spektroskopie, kalibriert mittels quantitativer C-NMR-Spektroskopie im CRYSTEX QC-Verfahren, im Bereich von 1,0 bis 8,0 Gewichtsprozent,

f) eine intrinsische Viskosität der löslichen Fraktion (iV(SF)) gemäß CRYSTEX QC-Analyse, ermittelt nach DIN ISO 1628/1, im Bereich von 1,20 bis 4,50 dL/g,

g) eine intrinsische Viskosität der kristallinen Fraktion (iV(CF)) gemäß CRYSTEX QC-Analyse, ermittelt nach DIN ISO 1628/1, im Bereich von 1,20 bis 4,50 dL/g und

h) ein intrinsisches Viskositätsverhältnis (iV(SF)/iV(CF)), bestimmt nach DIN ISO 1628/1, im Bereich von 0,50 bis 2,00.

10. Mehrschichtfilm (F) nach Anspruch 8 oder 9, wobei das heterophasische Propylen-Ethylen-Copolymer (HECO) eine oder mehrere, bevorzugt alle, der folgenden Eigenschaften aufweist:

a) einen Schmelzindex ($MFR_2$), bestimmt nach ISO 1133 bei 230 °C und 2,16 kg, im Bereich von 0,1 bis 6,0 g/10 min,

b) einen Gehalt an löslicher Fraktion (SF) im Bereich von 5 bis 30 Gewichtsprozent und an kristalliner Fraktion (CF) im Bereich von 70 bis 95 Gewichtsprozent, beide bestimmt mittels CRYSTEX QC-Analyse,

c) einen Ethylen-Gehalt (C2(gesamt)), bestimmt mittels FT-IR-Spektroskopie, kalibriert mittels quantitativer $^{13}$C-NMR-Spektroskopie im CRYSTEX QC-Verfahren, im Bereich von 3,0 bis 15,0 Gewichtsprozent,

d) einen Ethylen-Gehalt der löslichen Fraktion (C2(SF)) gemäß CRYSTEX QC-Analyse, ermittelt durch FT-IR-Spektroskopie, kalibriert durch quantitative $^{13}$C NMR-Spektroskopie im CRYSTEX QC-Verfahren, im Bereich von 17,0 bis 60,0 Gewichtsprozent,

e) einen Ethylen-Gehalt der kristallinen Fraktion (C2(CF)) gemäß CRYSTEX QC-Analyse, ermittelt durch FT-IR-Spektroskopie, kalibriert durch quantitative $^{13}$C-NMR-Spektroskopie im CRYSTEX QC-Verfahren, im Bereich von 1,0 bis 8,0 Gewichtsprozent,

f) eine intrinsische Viskosität der löslichen Fraktion (iV(SF)) gemäß CRYSTEX QC-Analyse, ermittelt nach DIN ISO 1628/1, im Bereich von 1,20 bis 4,50 dL/g, und

g) eine intrinsische Viskosität der kristallinen Fraktion (iV(CF)) gemäß CRYSTEX QC-Analyse, bestimmt nach DIN ISO 1628/1, im Bereich von 1,20 bis 4,50 dL/g.

11. Mehrschichtfilm (F) nach einem der Ansprüche 8 bis 10, wobei das statistische heterophasische Propylen-Ethylen-Copolymer (RAHECO') das gleiche ist wie das statistische heterophasische Propylen-Ethylen-Copolymer (RAHECO).

12. Mehrschichtfilm (F) nach einem der vorhergehenden Ansprüche, der eine Dicke im Bereich von 20 bis 150 μm aufweist.

13. Mehrschichtfilm (F) nach einem der vorhergehenden Ansprüche, der eine oder mehrere, bevorzugt alle, der folgenden Eigenschaften aufweist:

a) einen Zugmodul in Maschinenrichtung (TM-MD), gemessen nach ISO 527-3, im Bereich von 700 bis 1500 MPa,

b) einen Zugmodul in Querrichtung (TM-TD), gemessen nach ISO 527-3, im Bereich von 700 bis 1500 MPa, und

c) eine Dart-Drop-Schlagzähigkeit (DDI), gemessen nach ISO 7765-1, im Bereich von 100 bis 600 g.

14. Mehrschichtfilm (F) nach einem der vorhergehenden Ansprüche, der einen Trübungswert, bestimmt nach ASTM D1003, im Bereich von 10 bis 40 % aufweist.

15. Mehrschichtfilm (F) nach einem der vorhergehenden Ansprüche, der eine oder mehrere, bevorzugt alle der folgenden Eigenschaften aufweist:

a) eine Siegelanfangstemperatur (SIT), bestimmt nach der in den Messmethoden angegebenen Methode, im Bereich von 115 bis 130 °C,

b) eine Siegelnahtfestigkeit vor Sterilisation (b.s.), bestimmt nach der in den Messmethoden angegebenen Methode, im Bereich von 15 bis 40 N/mm, und

c) eine Siegelnahtfestigkeit nach Sterilisation (a.s.), bestimmt nach der in den Messmethoden angegebenen Methode, im Bereich von 20 bis 45 N/mm.

**Revendications**

1. Film multicouche (F), comprenant, dans l'ordre donné, les couches suivantes :

(A) une couche de peau, comprenant au moins 90 % en poids, sur la base du poids total de la couche de peau, d'un polypropylène ou d'un mélange de polypropylènes ;

(B) une couche centrale, comprenant au moins 90 % en poids, sur la base du poids total de la couche centrale, d'un polypropylène ou d'un mélange de polypropylènes ; et

(C) une couche de scellement, comprenant au moins 90 % en poids, sur la base du poids total de la couche d'étanchéité, d'une composition de polypropylène (PC) comprenant les composants suivants : i) 20 à 70 % en poids, sur la base du poids total de la composition de polypropylène (PC), d'un copolymère de propylène-éthylène hétérophasique statistique (RAHECO), présentant un indice de fluidité à chaud (MFR$_2$), déterminé selon la norme ISO 1133 à 230 °C et 2,16 kg, dans la plage de 0,1 à 10,0 g/10 min, comprenant :

a) une matrice cristalline (M) qui est un copolymère statistique de propylène-éthylène ; et

b) un élastomère amorphe de propylène-éthylène (E) ; ii) 1,0 à 50 % en poids, sur la base du poids total de la composition de polypropylène (PC), d'un premier copolymère statistique de propylène-éthylène (R-PP1) présentant un indice de fluidité à chaud (MFR$_2$), déterminé selon la norme ISO 1133 à 230 °C et 2,16 kg, dans la plage de 1,0 à 6,0 g/10 min ; et iii) 10 à 50 % en poids, sur la base du poids total de la composition de polypropylène (PC), d'un deuxième copolymère statistique de propylène-éthylène (R-PP2) présentant un indice de fluidité à chaud (MFR$_2$), déterminé selon la norme ISO 1133 à 230 °C et 2,16 kg, dans la plage de 7,0 à 20 g/10 min, dans lequel les quantités combinées du copolymère de propylène-éthylène hétérophasique statistique (RAHECO), du premier copolymère statistique de propylène-éthylène (R-PP1) et du deuxième copolymère statistique de propylène-éthylène (R-PP2) sont d'au moins 90 % en poids, par rapport au poids total de la composition de polypropylène (PC).

2. Film multicouche (F) selon la revendication 1, dans lequel le copolymère de propylène-éthylène hétérophasique statistique (RAHECO) présente une ou plusieurs, de préférence la totalité, des propriétés suivantes : a) une teneur en fraction soluble (SF) dans la plage de 10 à 45 % en poids et une teneur en fraction cristalline (CF) dans la plage de 55 à 90 % en poids, toutes deux déterminées selon l'analyse CRYSTEX QC comme décrit dans la description ;

b) une température de fusion (Tm), déterminée par calorimétrie différentielle à balayage (DSC), dans la plage de 130 à 155 °C ; et

c) la matrice cristalline (M) étant exempte de régiodéfauts 2,1, tel que déterminé par spectroscopie RMN $^{13}$C comme décrit dans la description.

3. Film multicouche (F) selon la revendication 1 ou la revendication 2, dans lequel le copolymère de propylène-éthylène hétérophasique statistique (RAHECO) présente une ou plusieurs, de préférence la totalité, des propriétés suivantes :

a) une teneur en éthylène (C2 (total)), déterminée par spectroscopie FT-IR étalonnée par spectroscopie RMN $^{13}$C quantitative dans le procédé CRYSTEX QC, dans la plage de 3,0 à 15,0 % en poids ;

b) une teneur en éthylène de la fraction soluble (C2(SF)), selon l'analyse CRYSTEX QC, déterminée par spectroscopie FT-IR étalonnée par spectroscopie RMN $^{13}$C quantitative dans le procédé CRYSTEX QC, dans la plage de 17,0 à 60,0 % en poids ; et

c) une teneur en éthylène de la fraction cristalline (C2(SF)), selon l'analyse CRYSTEX QC, déterminée par spectroscopie FT-IR étalonnée par spectroscopie RMN $^{13}$C quantitative dans le procédé CRYSTEX QC, dans la plage de 1,0 à 8,0 % en poids.

4. Film multicouche (F) selon l'une des revendications précédentes, dans lequel le copolymère de propylène-éthylène hétérophasique statistique (RAHECO) présente une ou plusieurs, de préférence la totalité, des propriétés suivantes :

a) une viscosité intrinsèque de la fraction soluble (iV(SF)) selon l'analyse CRYSTEX QC, déterminée selon la norme DIN ISO 1628/1, dans la plage de 1,20 à 4,50 dl/g ;

b) une viscosité intrinsèque de la fraction cristalline (iV(CF)) selon l'analyse CRYSTEX QC, déterminée selon la norme DIN ISO 1628/1, dans la plage de 1,20 à 4,50 dl/g ; et

c) un rapport de viscosités intrinsèques (iV(SF)/iV(CF)), déterminé selon la norme DIN ISO 1628/1, dans la plage de 0,50 à 2,00.

5. Film multicouche (F) selon l'une des revendications précédentes, dans lequel le premier copolymère statistique de propylène-éthylène (R-PP1) présente une ou plusieurs, de préférence la totalité, des propriétés suivantes :

a) une teneur en éthylène (C2), déterminée par spectroscopie RMN $^{13}$C quantitative, dans la plage de 1,0 à 5,5 % en poids ;

b) une teneur en fraction soluble à froid dans le xylène (XCS), déterminée selon l'analyse ISO 16152, dans la plage de 0,2 à 5,0 % en poids ;

c) une température de fusion (Tm), déterminée par calorimétrie différentielle à balayage (DSC), dans la plage de 130 à 155 °C ;

d) une température de cristallisation (Tc) mesurée par calorimétrie différentielle à balayage (DSC) dans la plage de 110 à 125 °C ; et

e) une teneur en régiodéfauts 2,1, telle que déterminée par spectroscopie RMN $^{13}$C dans la plage de 0,05 à 1,40 % en mole.

6. Film multicouche (F) selon l'une des revendications précédentes, dans lequel le deuxième copolymère statistique de propylène-éthylène (R-PP2) présente une ou plusieurs, de préférence la totalité, des propriétés suivantes :

a) une teneur en éthylène (C2), déterminée par spectroscopie RMN $^{13}$C quantitative, dans la plage de 1,0 à 5,5 % en poids ;

b) une teneur en fraction soluble à froid dans le xylène (XCS), déterminée selon l'analyse ISO 16152, dans la plage de 0,2 à 5,0 % en poids ;

c) une température de fusion (Tm), déterminée par calorimétrie différentielle à balayage (DSC), dans la plage de 125 à 145 °C ;

d) une température de cristallisation (Tc) mesurée par calorimétrie différentielle à balayage (DSC) dans la plage de 100 à 120 °C ; et

e) une teneur en régiodéfauts 2,1, telle que déterminée par spectroscopie RMN $^{13}$C dans la plage de 0,05 à 1,40 % en mole.

7. Film multicouche (F) selon l'une des revendications précédentes, dans lequel :

a) la couche de peau présente une épaisseur dans la plage de 10 à 40 % de l'épaisseur totale du film multicouche (F) ;

b) la couche centrale présente une épaisseur dans la plage de 30 à 70 % de l'épaisseur totale du film multicouche (F) ; et

c) la couche de scellement présente une épaisseur dans la plage de 10 à 40 % de l'épaisseur totale du film multicouche (F).

8. Film multicouche (F) selon l'une des revendications précédentes, dans lequel au moins l'une, de préférence les deux, parmi la couche de peau et la couche centrale comprend au moins 90 % en poids d'une composition de polypropylène (PC') comprenant les composants suivants :

i) de 15 à 45 % en poids, sur la base du poids total de la composition de polypropylène (PC'), d'un copolymère de propylène-éthylène hétérophasique statistique (RAHECO') présentant une température de fusion (Tm), déterminée par calorimétrie différentielle à balayage (DSC), dans la plage de 130 à 155 °C, dans lequel le copolymère de propylène-éthylène hétérophasique statistique (RAHECO') comprend :

a1) une matrice cristalline (M) étant un copolymère statistique de propylène-éthylène, de préférence exempt de régiodéfauts 2,1, tel que déterminé par spectroscopie RMN $^{13}$C quantitative ; et

b1) un élastomère amorphe de propylène-éthylène (E) ;

ii) de 55 à 85 % en poids, sur la base du poids total de la composition de polypropylène (PC'), d'un copolymère de propylène-éthylène hétérophasique (HECO) présentant une température de fusion (Tm), déterminée par calorimétrie différentielle à balayage (DSC), dans la plage de 150 à 170 °C, dans lequel le copolymère de propylène-éthylène hétérophasique (HECO) comprend :

a2) une matrice cristalline (M) étant un homopolymère de propylène, de préférence exempt de régiodéfauts 2,1, tel que déterminé par spectroscopie RMN $^{13}$C quantitative ; et
b2) un élastomère amorphe de propylène-éthylène (E), dans lequel les quantités combinées du copolymère de propylène-éthylène hétérophasique statistique (RAHECO') et du copolymère de propylène-éthylène hétérophasique (HECO) sont d'au moins 90 % en poids, par rapport au poids total de la composition de polypropylène (PC').

9. Film multicouche (F) selon la revendication 8, dans lequel le copolymère de propylène-éthylène hétérophasique statistique (RAHECO') présente une ou plusieurs, de préférence la totalité, des propriétés suivantes :

(a) un indice de fluidité à chaud (MFR$_2$) déterminé selon la norme ISO 1133 à 230 °C et 2,16 kg dans la plage de 0,1 à 10,0 g/10 min ;
b) une teneur en fraction soluble (SF) dans la plage de 10 à 45 % en poids et une teneur en fraction cristalline (CF) dans la plage de 55 à 90 % en poids, toutes deux déterminées selon l'analyse CRYSTEX QC ;
c) une teneur en éthylène (C2(total)), déterminée par spectroscopie FT-IR étalonnée par spectroscopie RMN $^{13}$C quantitative dans le procédé CRYSTEX QC, dans la plage de 3,0 à 15,0 % en poids ;
d) une teneur en éthylène de la fraction soluble (C2(SF)), selon l'analyse CRYSTEX QC, déterminée par spectroscopie FT-IR étalonnée par spectroscopie RMN $^{13}$C quantitative dans le procédé CRYSTEX QC, dans la plage de 17,0 à 60,0 % en poids ;
e) une teneur en éthylène de la fraction cristalline (C2(CF)), selon l'analyse CRYSTEX QC, déterminée par spectroscopie FT-IR étalonnée par spectroscopie RMN $^{13}$C quantitative dans le procédé CRYSTEX QC, dans la plage de 1,0 à 8,0 % en poids ;
f) une viscosité intrinsèque de la fraction soluble (iV(SF)) selon l'analyse CRYSTEX QC, déterminée selon la norme DIN ISO 1628/1, dans la plage de 1,20 à 4,50 dl/g ;
g) une viscosité intrinsèque de la fraction cristalline (iV(CF)) selon l'analyse CRYSTEX QC, déterminée selon la norme DIN ISO 1628/1, dans la plage de 1,20 à 4,50 dl/g ; et
h) un rapport de viscosités intrinsèques (iV(SF)/iV(CF)), déterminé selon la norme DIN ISO 1628/1, dans la plage de 0,50 à 2,00.

10. Film multicouche (F) selon la revendication 8 ou la revendication 9, dans lequel le copolymère propylène-éthylène hétérophasique (HECO) présente une ou plusieurs, de préférence la totalité, des propriétés suivantes :

a) un indice de fluidité à chaud (MFR$_2$), déterminé selon la norme ISO 1133 à 230 °C et 2,16 kg, dans la plage de 0,1 à 6,0 g/10 min ;
b) une teneur en fraction soluble (SF) dans la plage de 5 à 30 % en poids et une teneur en fraction cristalline (CF) dans la plage de 70 à 95 % en poids, toutes deux déterminées selon l'analyse CRYSTEX QC ;
c) une teneur en éthylène (C2(total)), déterminée par spectroscopie FT-IR étalonnée par spectroscopie RMN $^{13}$C quantitative dans le procédé CRYSTEX QC, dans la plage de 3,0 à 15,0 % en poids ;
d) une teneur en éthylène de la fraction soluble (C2(SF)), selon l'analyse CRYSTEX QC, déterminée par spectroscopie FT-IR étalonnée par spectroscopie RMN $^{13}$C quantitative dans le procédé CRYSTEX QC, dans la plage de 17,0 à 60,0 % en poids ;
e) une teneur en éthylène de la fraction cristalline (C2(CF)), selon l'analyse CRYSTEX QC, déterminée par spectroscopie FT-IR étalonnée par spectroscopie RMN $^{13}$C quantitative dans le procédé CRYSTEX QC, dans la plage de 1,0 à 8,0 % en poids ;
f) une viscosité intrinsèque de la fraction soluble (iV(SF)) selon l'analyse CRYSTEX QC, déterminée selon la norme DIN ISO 1628/1, dans la plage de 1,20 à 4,50 dl/g ; et
g) une viscosité intrinsèque de la fraction cristalline (iV(CF)) selon l'analyse CRYSTEX QC, déterminée selon la norme DIN ISO 1628/1, dans la plage de 1,20 à 4,50 dl/g.

11. Film multicouche (F) selon l'une des revendications 8 à 10, dans lequel le copolymère de propylène-éthylène hétérophasique statistique (RAHECO') est identique au copolymère de propylène-éthylène hétérophasique statistique (RAHECO).

12. Film multicouche (F) selon l'une des revendications précédentes, présentant une épaisseur dans la plage de 20 à 150 $\mu$m.

13. Film multicouche selon l'une des revendications précédentes présentant une ou plusieurs, de préférence la totalité, des propriétés suivantes :

a) un module de traction dans la direction machine (TM-MD), mesuré selon la norme ISO 527-3, dans la plage de 700 à 1500 MPa ; b) un module de traction dans la direction transversale (TM-TD), mesuré selon la nome ISO 527-3, dans la plage de 700 à 1500 MPa ; et
c) une résistance à l'impact par chute de dard (DDI), mesurée selon la norme ISO 7765-1, dans la plage de 100 à 600 g.

14. Film multicouche (F) selon l'une des revendications précédentes, présentant une valeur de trouble, déterminée selon la norme ASTM D1003, dans la plage de 10 à 40 %.

15. Film multicouche selon l'une des revendications précédentes présentant une ou plusieurs, de préférence la totalité, des propriétés suivantes :

a) une température d'initiation de scellement (SIT), déterminée selon le procédé spécifié dans les procédés de mesure, dans la plage de 115 à 130 °C ;
b) une résistance au scellage avant stérilisation (b.s.), déterminée selon le procédé spécifié dans les procédés de mesure, dans la plage de 15 à 40 N/mm ; et
c) une résistance au scellage après stérilisation (a.s.), déterminée selon le procédé spécifié dans les procédés mesure, dans la plage de 20 à 45 N/mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3912794 A
- WO 2016066446 A1
- EP 290256 B1
- EP 2960279 B1
- WO 2013007650 A
- WO 201511135 A
- EP 3184587 A

### Non-patent literature cited in the description

- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** Mag. Res. in Chem.. S198, 2007, vol. 45
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **RESCONI, L.** ; **CAVALLO, L.** ; **FAIT, A.** ; **PIEMONTESI, F.** *Chem. Rev.*, 2000, vol. 100, 1253
- **A.J. BRANDOLINI** ; **D.D. HILLS**. NMR spectra of polymers and polymer additives. Marcel Deker Inc., 2000
- *International Journal of Polymer Analysis and Characterization*, vol. 25 (8), 581-596
- *CHEMICAL ABSTRACTS*, 6683-19-8
- *CHEMICAL ABSTRACTS*, 31570-04-4
- *CHEMICAL ABSTRACTS*, 1592-23-0
- *CHEMICAL ABSTRACTS*, 11097-59-9
- *CHEMICAL ABSTRACTS*, 491589-22-1
- *CHEMICAL ABSTRACTS*, 85209-93-4
- *CHEMICAL ABSTRACTS*, 112-84-5
- *CHEMICAL ABSTRACTS*, 7631-86-9